# EUROPEAN PATENT APPLICATION

(11) **EP 3 032 377 A1**
(43) Date of publication of application: **15.06.2016**
(21) Application number: 13891145.8
(22) Date of filing: 19.12.2013
(51) Int. Cl.: G06F 3/01, G06F 3/14, G06F 3/16, H04B 1/40

(54) **MOBILE TERMINAL AND CONTROL METHOD THEREFOR**

(30) Priority: 05.08.2013 KR 20130092415
(71) Applicant: LG Electronics Inc., Seoul 150-721 (KR)
(72) Inventor: PARK, Mihyun, Seoul 153-801 (KR); KIM, Seonghyok, Seoul 153-801 (KR); LIM, Gukchan, Seoul 153-801 (KR); KIM, Hyunjin, Seoul 153-801 (KR); SOHN, Youngho, Seoul 153-801 (KR); WOO, Sungho, Seoul 153-801 (KR)
(74) Representative: Ter Meer Steinmeister & Partner
(86) International application number: PCT/KR2013/011888
(87) International publication number: WO 2015/020284

(57) **Abstract**

The present disclosure relates to a mobile terminal and a control method therefore which can control the function of the mobile terminal according to external force. The mobile terminal, according to one embodiment of the present invention, comprises: a terminal body; an acceleration sensor for detecting taps tapping on an object by using the movement of the body, and generating a control signal when a multiple number of taps are detected within a time limit; and a control unit for controlling at least one among function capable of being executed on the mobile terminal in response to the control signal.

## Description

### TECHNICAL FIELD

The present disclosure relates to a mobile terminal capable of controlling a function of the mobile terminal in response to external force, and a control method therefor.

### BACKGROUND ART

Terminals may be divided into mobile/portable terminals and stationary terminals according to their mobility. Also, the mobile terminals may be classified into handheld terminals and vehicle mount terminals according to whether or not a user can directly carry.

As it becomes multifunctional, a mobile terminal can be allowed to capture still images or moving images, play music or video files, play games, receive broadcast and the like, so as to be implemented as an integrated multimedia player.

Efforts are ongoing to support and increase the functionality of mobile terminals. Such efforts include software and hardware improvements, as well as changes and improvements in the structural components.

In addition, requirement for a new user interface to control functions of a terminal by simple manipulation with respect to the terminal or surroundings of the terminal is increasing.

### DISCLOSURE OF THE INVENTION

Therefore, to obviate those problems, an aspect of the detailed description is to provide a mobile terminal capable of controlling the terminal merely by tapping a terminal body or surroundings of the terminal, and a control method therefor.

To achieve these and other advantages and in accordance with the purpose of the present invention, as embodied and broadly described herein, there is provided a mobile terminal, including a terminal body, an acceleration sensor capable of sensing taps tapping on an object using a movement of the terminal body, and generating a control signal when a plural number of taps are sensed within a limited period of time, and a controller capable of controlling at least one of functions executable on the terminal in response to the control signal.

In an exemplary embodiment disclosed herein, the acceleration sensor may generate the control signal when a second tap hitting the object by a second reference number of times is sensed within a limited period of time after a first tap hitting the object by a first reference number of times is sensed.

In an exemplary embodiment disclosed herein, the mobile terminal may further include a sensing unit activated when the acceleration sensor senses the first tap, and capable of sensing the taps hitting the object. The controller may control the at least one function in response to the control signal when the acceleration sensor and the sensing unit sense the second tap.

In an exemplary embodiment disclosed herein, the sensing unit may include at least one of 1) a touch sensor capable of sensing the second tap using a touch applied to the terminal body, 2) a microphone capable of sensing the second tap using a sound generated around the terminal body, 3) a proximity sensor capable of sensing the second tap using existence or non-existence of an object located adjacent to the terminal body, and 4) a pressure sensor capable of sensing the second tap using pressure applied to the terminal body.

In an exemplary embodiment disclosed herein, the controller may not control the at least one function even though the control signal is generated when the proximity sensor detects an object located adjacent to a front surface of the terminal body.

In an exemplary embodiment disclosed herein, the controller may discern a medium of the second tap according to a touch area of the second tap applied to the touch sensor, and execute a different function according to the discerned medium.

In an exemplary embodiment disclosed herein, the mobile terminal may further include a touch sensor activated in response to the first tap. The controller may execute a function corresponding to a touch input sensed by the touch sensor, in response to the control signal.

In an exemplary embodiment disclosed herein, the controller may execute a different function according to a direction of a drag input when the touch input is the drag input that consecutively moves from a sensed position of the second tap to an arbitrary position.

In an exemplary embodiment disclosed herein, the mobile terminal may further include a speaker provided in the terminal body and capable of outputting sound information. The controller may activate the speaker in response to the control signal, differently change a set value associated with the speaker according to the direction of the drag input, and differently control a changed degree of the set value according to a moved distance of the drag input.

In an exemplary embodiment disclosed herein, the mobile terminal may further include a display unit capable of outputting a touch track corresponding to the touch input.

In an exemplary embodiment disclosed herein, the controller may execute a different function according to a mark formed by a touch track corresponding to the touch input.

In an exemplary embodiment disclosed herein, a position to which the tap hitting the object is applied may include a position on the terminal body and a position out of the terminal body.

In an exemplary embodiment disclosed herein, the controller may control a different function according to a position to which the second tap is applied.

In an exemplary embodiment disclosed herein, the mobile terminal may further include a display unit disposed on a front surface of the terminal body. The controller may activate the display unit in response to the control signal, and output a preset screen on the display unit.

In an exemplary embodiment disclosed herein, the set screen may be a screen which was output just before the display unit is deactivated.

In an exemplary embodiment disclosed herein, the controller may activate a microphone capable of receiving a voice command in response to the control signal, and execute voice recognition with respect to the voice command received through the activated microphone.

In an exemplary embodiment disclosed herein, the acceleration sensor may be in an always-on state while power is supplied to the controller.

In an exemplary embodiment disclosed herein, the controller may change setting information related to a function corresponding to screen information output on the display unit, among currently-executed functions, in response to the second tap. The controller may output guide information related to setting information, which is controllable according to an applied position of the second tap, on the display unit when the first tap is applied.

In an exemplary embodiment disclosed herein, the mobile terminal may further include a display unit disposed on the terminal body, and the acceleration sensor may sense a tap hitting the terminal body even in an inactive state of the display unit.

In an exemplary embodiment disclosed herein, when a tap corresponding to a preset condition is applied in the inactive state of the display unit, the display unit may output thereon information, which is related to information output at the tap-applied position of initial screen information output on the display unit, when the display unit is switched from the inactive state into an active state.

In an exemplary embodiment disclosed herein, the initial screen information may correspond to a lock screen. When the tap is applied to a first region of a display region of the display unit, time information may be output. When the tap is applied to a second region, different from the first region, of the display region, a home screen page may be output.

In an exemplary embodiment disclosed herein, when a specific function is currently executed in the inactive state of the display unit, the controller may control the specific function with maintaining the inactive state of the display unit, in response to the sensed tap.

In an exemplary embodiment disclosed herein, the controller may change a set value for one of functions currently executed on the terminal. When the tap is sensed by a preset number of times within a preset period of time, the controller may change a set value for one of functions currently executed on the terminal. The changed set value may relate to information which is output or input at a position corresponding to the tap-applied position.

In an exemplary embodiment disclosed herein, the mobile terminal may further include a microphone disposed in the terminal body and capable of receiving voice information, and a speaker disposed in the terminal body and capable of outputting sound information. While the microphone and the speaker are in an active state, the controller may change a set value associated with the microphone when the tap is applied to a position adjacent to the microphone, and change a set value associated with the speaker when the tap is applied to a position adjacent to the speaker.

In an exemplary embodiment disclosed herein, the controller may differently control a changed degree of the changed set value according to applied strength of the tap.

In an exemplary embodiment disclosed herein, the terminal may include a plurality of input or output components, and the controller may control whether or not to activate a component which is located at a position to which a tap hitting the terminal body is applied.

In an exemplary embodiment disclosed herein, when a camera is disposed at the applied position of the tap, the camera may be activated or deactivated. When a flash is disposed at the applied position of the tap, the flash may be activated or deactivated.

In an exemplary embodiment disclosed herein, the terminal body may include a front surface with a display unit, and a rear surface facing the front surface. The controller may output context information related to the terminal by voice when a tap corresponding to the preset condition is applied to the rear surface.

In an exemplary embodiment disclosed herein, a plurality of applications may be executable on the terminal at the same time. When a tap corresponding to the preset condition is applied to a preset region of the terminal body, the controller may terminate at least one of the plurality of currently-executed applications.

In an exemplary embodiment disclosed herein, the controller may sequentially terminate the plurality of currently-executed applications every time when the tap corresponding to the preset condition is applied.

In an exemplary embodiment disclosed herein, the acceleration sensor may sense a tap hitting the terminal body or a tap hitting an object, on which the terminal body is placed. When the tap hitting the object is sensed by the acceleration sensor, the controller may execute a voice recognition function or control an active state of the display unit.

In an exemplary embodiment disclosed herein, when the tap hitting the object is sensed in an active state of the display unit, a period of time for maintaining the active state of the display unit may extend.

In the meantime, a mobile terminal in accordance with one exemplary embodiment disclosed herein may include an acceleration sensor capable of sensing a movement of a terminal body, and a controller, wherein the acceleration sensor may execute the steps of sensing a first tap hitting an object using the movement of the terminal body, sensing a second tap within a limited period of time after the first tap is sensed, and generating a control signal in response to the sensed second tap. The controller may control at least one of functions executable on the terminal, in response to the control signal.

In an exemplary embodiment disclosed herein, the acceleration sensor may further execute the steps of restricting an operation with respect to the movement of the terminal body during a period of time set as a no-operation period after the first tap is sensed, and waiting for sensing the second tap when the movement of the terminal body is maintained within a preset range for a period of time set as a silent period after the lapse of the period of time set as the no-operation period.

In an exemplary embodiment disclosed herein, the acceleration sensor may generate an acceleration signal according to the movement of the terminal body, and sense the first and second taps by comparing an n^{th} generated acceleration signal with an n-1^{st} generated acceleration signal.

In an exemplary embodiment disclosed herein, the mobile terminal may further include a sensing unit activated when the acceleration sensor senses the first tap, and capable of sensing taps hitting the object. The controller may control the at least one function in response to the control signal when both of the acceleration sensor and the sensing unit sense the second tap.

### ADVANTAGEOUS EFFECT

In a mobile terminal according to one exemplary embodiment disclosed herein, a function of the mobile terminal can be controlled in response to a tap hitting an object. This may allow the user to use a user interface, which facilitates the control of the function of the mobile terminal, even without manipulating the mobile terminal in a manner of applying a plurality of taps to the mobile terminal.

In a mobile terminal according to one exemplary embodiment disclosed herein, a different function can be controlled or different setting information can be changed according to a tap-applied position. Therefore, a user can control various functions merely by tapping or hitting the mobile terminal, in a manner of applying taps to various positions.

In a mobile terminal according to one exemplary embodiment disclosed herein, an acceleration sensor may be used to sense a tap. The acceleration sensor can also sense a tap applied to a position out of the terminal body as well as a tap applied to the terminal body. Therefore, a user can control various functions of the terminal using the taps under a situation that the terminal is located away from the user or it is impossible to apply a touch due to wearing gloves.

In a mobile terminal according to one exemplary embodiment disclosed herein, an acceleration sensor can continuously be in an always-on state until before a battery is run out of power even while another sensing unit is deactivated, and thus sense taps applied to the mobile terminal. In addition, in the mobile terminal according to the one exemplary embodiment disclosed herein, when a first tap is sensed, various sensors such as a touch sensor and the like can be activated. Therefore, the mobile terminal can sense a second tap using such various sensors along with the acceleration sensor. This may result in preventing a malfunction of the mobile terminal and minimizing power consumption.

### BRIEF DESCRIPTION OF THE DRAWINGS

FIG. 1 is a block diagram of a mobile terminal in accordance with the present invention.
FIGS. 2A and 2B are conceptual views of a communication system operable with a mobile terminal in accordance with the present invention.
FIG. 3A is a front perspective view illustrating one example of a mobile terminal in accordance with the present invention.
FIG. 3B is a rear perspective view of the mobile terminal illustrated in FIG. 3A.
FIG. 4 is a flowchart illustrating a method for controlling a mobile terminal in accordance with one exemplary embodiment disclosed herein.
FIG. 5 is a flowchart illustrating the control method illustrated in FIG. 4 in more detail.
FIG. 6 is a view illustrating a method of detecting or sensing a tap by an acceleration sensor according to the control method illustrated in FIG. 5.
FIGS. 7A, 7B, 7C, 7D and 7E are conceptual views illustrating the control method illustrated in FIG. 4.
FIGS. 8A, 8B and 8C are conceptual views illustrating a method of executing a different function according to an object to apply a tap (or a tap object) in a mobile terminal in accordance with one exemplary embodiment disclosed herein.
FIGS. 9A, 9B, 9C, 10A, 10B and 11 are conceptual views illustrating a method of executing a different function according to a position to be tapped (or tap position) in a mobile terminal in accordance with one exemplary embodiment disclosed herein.
FIGS. 12A and 12B are conceptual views illustrating a method of executing a different function according to a tap pattern in a mobile terminal in accordance with one exemplary embodiment disclosed herein.
FIGS. 13, 14, 15A, 15B, 15C and 15D are conceptual views illustrating a method of controlling a function according to a touch input which is applied after "knockknock" is applied in a mobile terminal in accordance with one exemplary embodiment disclosed herein.
FIG. 16 is a conceptual view illustrating a method of controlling a mobile terminal in response to the mobile terminal being tapped under a specific situation or environment in the mobile terminal in accordance with one exemplary embodiment disclosed herein.
FIG. 17 is a conceptual view illustrating a method of connecting a plurality of mobile terminals which have sensed the same tap in a mobile terminal in accordance with one exemplary embodiment disclosed herein.
FIG. 18 is a conceptual view illustrating an exemplary operation of deactivating a display unit in response to "knockknock" in a mobile terminal in accordance with one exemplary embodiment disclosed herein.

### MODES FOR CARRYING OUT THE PREFERRED EMBODIMENTS

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, moreover, the detailed description will be omitted when a specific description for publicly known technologies to which the invention pertains is judged to obscure the gist of the present disclosure. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, and the like. However, it may be easily understood by those skilled in the art that the configuration according to the exemplary embodiments of this specification can be applied to stationary terminals such as digital TV, desktop computers and the like excluding a case of being applicable only to the mobile terminals.

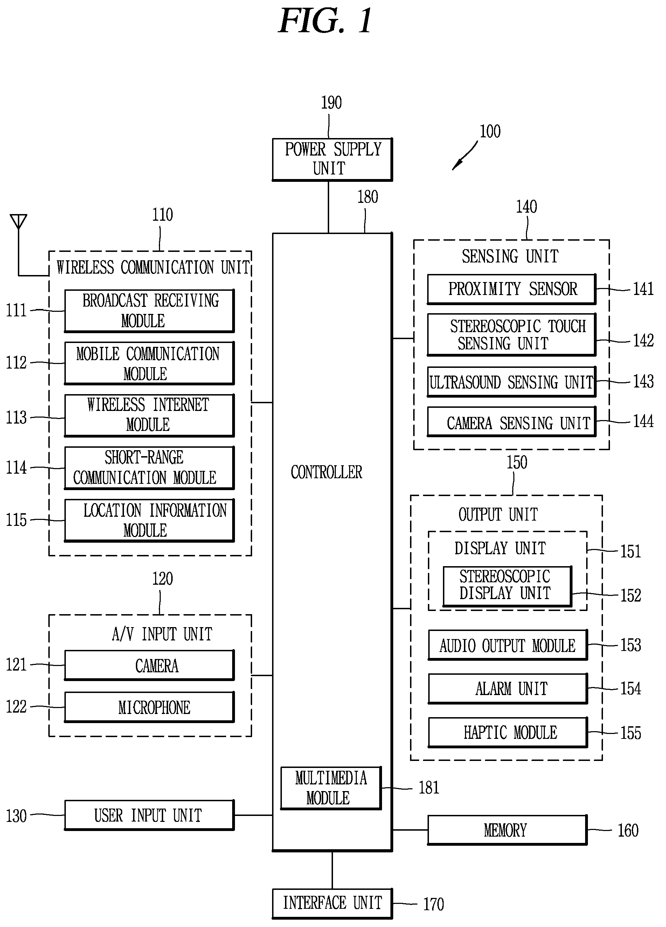

FIG. 1 is a block diagram of a mobile terminal 100 in accordance with one exemplary embodiment.

The mobile terminal 100 may comprise components, such as a wireless communication unit 110, an Audio/Video (A/V) input unit 120, a user input unit 130, a sensing unit 140, an output unit 150, a memory 160, an interface unit 170, a controller 180, a power supply 190 and the like. FIG. 1 shows the mobile terminal 100 having various components, but it is understood that implementing all of the illustrated components is not a requirement. Greater or fewer components may alternatively be implemented.

Hereinafter, each component 110 to 190 is described in sequence.

The wireless communication unit 110 may typically include one or more modules which permit wireless communications between the mobile terminal 100 and a wireless communication system or between the mobile terminal 100 and a network within which the mobile terminal 100 is located. For example, the wireless communication unit 110 may include at least one of a broadcast receiving module 111, a mobile communication module 112, a wireless Internet module 113, a short-range communication module 114, a location information module 115 and the like.

The broadcast receiving module 111 receives a broadcast signal and/or broadcast associated information from an external broadcast managing entity via a broadcast channel.

The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the mobile terminal. The broadcast signal may be implemented as a TV broadcast signal, a radio broadcast signal, and a data broadcast signal, among others. The broadcast signal may further include a data broadcast signal combined with a TV or radio broadcast signal.

Examples of broadcast associated information may include information associated with a broadcast channel, a broadcast program, a broadcast service provider, and the like. The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T) and the like. The broadcast receiving module 111 may be configured to be suitable for every broadcast system transmitting broadcast signals as well as the digital broadcasting systems.

Broadcast signals and/or broadcast associated information received via the broadcast receiving module 111 may be stored in a suitable device, such as a memory 160.

The mobile communication module 112 transmits/receives wireless signals to/from at least one of network entities (e.g., base station, an external mobile terminal, a server, etc.) on a mobile communication network. Here, the wireless signals may include audio call signal, video (telephony) call signal, or various formats of data according to transmission/reception of text/multimedia messages.

The mobile communication module 112 may implement a video call mode and a voice call mode. The video call mode indicates a state of calling with watching a callee's image. The voice call mode indicates a state of calling without watching the callee's image. The wireless communication module 112 may transmit and receive at least one of voice and image in order to implement the video call mode and the voice call mode.

The wireless Internet module 113 supports wireless Internet access for the mobile terminal. This module may be internally or externally coupled to the mobile terminal 100. Examples of such wireless Internet access may include Wireless LAN (WLAN) (Wi-Fi), Wireless Broadband (Wibro), Worldwide Interoperability for Microwave Access (Wimax), High Speed Downlink Packet Access (HSDPA) and the like.

The short-range communication module 114 denotes a module for short-range communications. Suitable technologies for implementing this module may include BLUETOOTHTM, Radio Frequency IDentification (RFID), Infrared Data Association (IrDA), Ultra-WideBand (UWB), ZigBeeTM, Near Field Communication (NFC) and the like.

The location information module 115 denotes a module for detecting or calculating a position of a mobile terminal. An example of the location information module 115 may include a Global Position System (GPS) module.

Still referring to FIG. 1, the A/V input unit 120 is configured to provide audio or video signal input to the mobile terminal. The A/V input unit 120 may include a camera 121 and a microphone 122. The camera 121 receives and processes image frames of still pictures or video obtained by image sensors in a video call mode or a capturing mode. The processed image frames may be displayed on a display unit 151.

The image frames processed by the camera 121 may be stored in the memory 160 or transmitted to the exterior via the wireless communication unit 110. Also, user's position information and the like may be calculated from the image frames acquired by the camera 121. Two or more cameras 121 may be provided according to the configuration of the mobile terminal.

The microphone 122 may receive an external audio signal while the mobile terminal is in a particular mode, such as a phone call mode, a recording mode, a voice recognition mode, or the like. This audio signal is processed into digital data. The processed digital data is converted for output into a format transmittable to a mobile communication base station via the mobile communication module 112 in case of the phone call mode. The microphone 122 may include assorted noise removing algorithms to remove noise generated in the course of receiving the external audio signal.

The user input unit 130 may generate input data input by a user to control the operation of the mobile terminal. The user input unit 130 may include a keypad, a dome switch, a touchpad (e.g., static pressure/capacitance), a jog wheel, a jog switch and the like.

The sensing unit 140 provides status measurements of various aspects of the mobile terminal. For instance, the sensing unit 140 may detect an open/close status of the mobile terminal, a change in a location of the mobile terminal 100, a presence or absence of user contact with the mobile terminal 100, the location of the mobile terminal 100, acceleration/deceleration of the mobile terminal 100, and the like, so as to generate a sensing signal for controlling the operation of the mobile terminal 100. For example, regarding a slide-type mobile terminal, the sensing unit 140 may sense whether a sliding portion of the mobile terminal is open or closed. Other examples include sensing functions, such as the sensing unit 140 sensing the presence or absence of power provided by the power supply 190, the presence or absence of a coupling or other connection between the interface unit 170 and an external device.

The output unit 150 is configured to output an audio signal, a video signal or a tactile signal. The output unit 150 may include a display unit 151, an audio output module 153, an alarm unit 154 and a haptic module 155.

The display unit 151 may output information processed in the mobile terminal 100. For example, when the mobile terminal is operating in a phone call mode, the display unit 151 will provide a User Interface (UI) or a Graphic User Interface (GUI), which includes information associated with the call. As another example, if the mobile terminal is in a video call mode or a capturing mode, the display unit 151 may additionally or alternatively display images captured and/or received, UI, or GUI.

The display unit 151 may be implemented using, for example, at least one of a Liquid Crystal Display (LCD), a Thin Film Transistor-Liquid Crystal Display (TFT-LCD), an Organic Light-Emitting Diode (OLED), a flexible display, a three-dimensional (3D) display, an e-ink display or the like.

Some of such displays 151 may be implemented as a transparent type or an optical transparent type through which the exterior is visible, which is referred to as 'transparent display'. A representative example of the transparent display may include a Transparent OLED (TOLED), and the like. The rear surface of the display unit 151 may also be implemented to be optically transparent. Under this configuration, a user can view an object positioned at a rear side of a terminal body through a region occupied by the display unit 151 of the terminal body.

The display unit 151 may be implemented in two or more in number according to a configured aspect of the mobile terminal 100. For instance, a plurality of the displays 151 may be arranged on one surface to be spaced apart from or integrated with each other, or may be arranged on different surfaces.

The display unit 151 may also be implemented as a stereoscopic display unit 152 for displaying stereoscopic images.

Here, the stereoscopic image may be a three-dimensional (3D) stereoscopic image, and the 3D stereoscopic image is an image refers to an image making a viewer feel that a gradual depth and reality of an object on a monitor or a screen is the same as a reality space. A 3D stereoscopic image is implemented by using binocular disparity. Binocular disparity refers to disparity made by the positions of two eyes. When two eyes view different 2D images, the images are transferred to the brain through the retina and combined in the brain to provide the perception of depth and reality sense.

The stereoscopic display unit 152 may employ a stereoscopic display scheme such as stereoscopic scheme (a glass scheme), an auto-stereoscopic scheme (glassless scheme), a projection scheme (holographic scheme), or the like. Stereoscopic schemes commonly used for home television receivers, or the like, include Wheatstone stereoscopic scheme, or the like.

The auto-stereoscopic scheme includes, for example, a parallax barrier scheme, a lenticular scheme, an integral imaging scheme, or the like. The projection scheme includes a reflective holographic scheme, a transmissive holographic scheme, or the like.

In general, a 3D stereoscopic image is comprised of a left image (a left eye image) and a right image (a right eye image). According to how left and right images are combined into a 3D stereoscopic image, the 3D stereoscopic imaging method is divided into a top-down method in which left and right images are disposed up and down in a frame, an L-to-R (left-to-right, side by side) method in which left and right images are disposed left and right in a frame, a checker board method in which fragments of left and right images are disposed in a tile form, an interlaced method in which left and right images are alternately disposed by columns and rows, and a time sequential (or frame by frame) method in which left and right images are alternately displayed by time.

Also, as for a 3D thumbnail image, a left image thumbnail and a right image thumbnail are generated from a left image and a right image of the original image frame, respectively, and then combined to generate a single 3D thumbnail image. In general, thumbnail refers to a reduced image or a reduced still image. The thusly generated left image thumbnail and the right image thumbnail are displayed with a horizontal distance difference therebetween by a depth corresponding to the disparity between the left image and the right image on the screen, providing a stereoscopic space sense.

As illustrated, a left image and a right image required for implementing a 3D stereoscopic image is displayed on the stereoscopic display unit 152 by a stereoscopic processing unit (not shown). The stereoscopic processing unit may receive the 3D image and extract the left image and the right image, or may receive the 2D image and change it into a left image and a right image.

Here, if the display unit 151 and a touch sensitive sensor (referred to as a touch sensor) have a layered structure therebetween (referred to as a 'touch screen'), the display unit 151 may be used as an input device as well as an output device. The touch sensor may be implemented as a touch film, a touch sheet, a touchpad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals are transmitted to a touch controller. The touch controller processes the received signals, and then transmits corresponding data to the controller 180. Accordingly, the controller 180 may sense which region of the display unit 151 has been touched.

Still referring to FIG. 1, a proximity sensor 141 may be arranged at an inner region of the mobile terminal 100 covered by the touch screen, or near the touch screen. The proximity sensor 141 may be provided as one example of the sensing unit 140. The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor.

The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

When a touch sensor is overlaid on the stereoscopic display unit 152 in a layered manner (hereinafter, referred to as 'stereoscopic touch screen'), or when the stereoscopic display unit 152 and a 3D sensor sensing a touch operation are combined, the stereoscopic display unit 152 may also be used as a 3D input device.

As examples of the 3D sensor, the sensing unit 140 may include a proximity sensor 141, a stereoscopic touch sensing unit 142, an ultrasonic sensing unit 143, and a camera sensing unit 144.

The proximity sensor 141 detects the distance between a sensing object (e.g., the user's finger or a stylus pen) applying a touch by using the force of electromagnetism or infrared rays without a mechanical contact and a detect surface. By using the distance, the terminal recognizes which portion of a stereoscopic image has been touched. In particular, when the touch screen is an electrostatic touch screen, the degree of proximity of the sensing object is detected based on a change of an electric field according to proximity of the sensing object, and a touch to the 3D image is recognized by using the degree of proximity.

The stereoscopic touch sensing unit 142 is configured to detect the strength or duration of a touch applied to the touch screen. For example, the stereoscopic touch sensing unit 142 may sense touch pressure. When the pressure is strong, it may recognize the touch as a touch with respect to an object located farther away from the touch screen toward the inside of the terminal.

The ultrasonic sensing unit 143 is configured to recognize position information of the sensing object by using ultrasonic waves.

The ultrasonic sensing unit 143 may include, for example, an optical sensor and a plurality of ultrasonic sensors. The optical sensor is configured to sense light and the ultrasonic sensors may be configured to sense ultrasonic waves. Since light is much faster than ultrasonic waves, a time for which the light reaches the optical sensor is much shorter than a time for which the ultrasonic wave reaches the ultrasonic sensor. Therefore, a position of a wave generation source may be calculated by using a time difference from the time that the ultrasonic wave reaches based on the light as a reference signal.

The camera sensing unit 144 includes at least one of a camera, a photo sensor, and a laser sensor.

For example, the camera and the laser sensor may be combined to detect a touch of the sensing object with respect to a 3D stereoscopic image. When distance information detected by a laser sensor is added to a 2D image captured by the camera, 3D information can be obtained.

In another example, a photo sensor may be laminated on the display device. The photo sensor is configured to scan a movement of the sensing object in proximity to the touch screen. In detail, the photo sensor includes photo diodes and transistors at rows and columns to scan content mounted on the photo sensor by using an electrical signal changing according to the quantity of applied light. Namely, the photo sensor calculates the coordinates of the sensing object according to variation of light to thus obtain position information of the sensing object.

The audio output module 153 may convert and output as sound audio data received from the wireless communication unit 110 or stored in the memory 160 in a call signal reception mode, a call mode, a record mode, a voice recognition mode, a broadcast reception mode, and the like. Also, the audio output module 153 may provide audible outputs related to a particular function performed by the mobile terminal 100 (e.g., a call signal reception sound, a message reception sound, etc.). The audio output module 153 may include a speaker, a buzzer or the like.

The alarm unit 154 outputs a signal for informing about an occurrence of an event of the mobile terminal 100. Events generated in the mobile terminal may include call signal reception, message reception, key signal inputs, a touch input etc. In addition to video or audio signals, the alarm unit 154 may output signals in a different manner, for example, using vibration to inform about an occurrence of an event. The video or audio signals may be also outputted via the audio output module 153, so the display unit 151 and the audio output module 153 may be classified as parts of the alarm unit 154.

A haptic module 155 generates various tactile effects the user may feel. A typical example of the tactile effects generated by the haptic module 155 is vibration. The strength and pattern of the haptic module 155 can be controlled. For example, different vibrations may be combined to be outputted or sequentially outputted.

Besides vibration, the haptic module 155 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 155 may be implemented to allow the user to feel a tactile effect through a muscle sensation such as fingers or arm of the user, as well as transferring the tactile effect through a direct contact. Two or more haptic modules 155 may be provided according to the configuration of the mobile terminal 100.

The memory 160 may store software programs used for the processing and controlling operations performed by the controller 180, or may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority to use the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via the interface unit 170.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

Also, the controller 180 may execute a lock state to restrict a user from inputting control commands for applications when a state of the mobile terminal meets a preset condition. Also, the controller 180 may control a lock screen displayed in the lock state based on a touch input sensed on the display unit 151 in the lock state of the mobile terminal.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein.

Software codes can be implemented by a software application written in any suitable programming language. The software codes may be stored in the memory 160 and executed by the controller 180.

Hereinafter, a communication system which is operable with the mobile terminal 100 according to the present disclosure will be described.

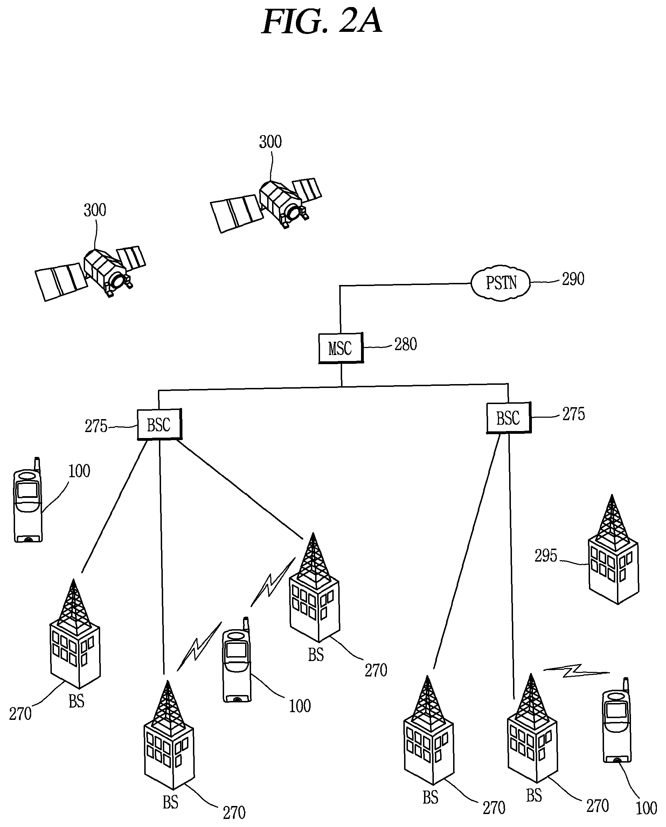

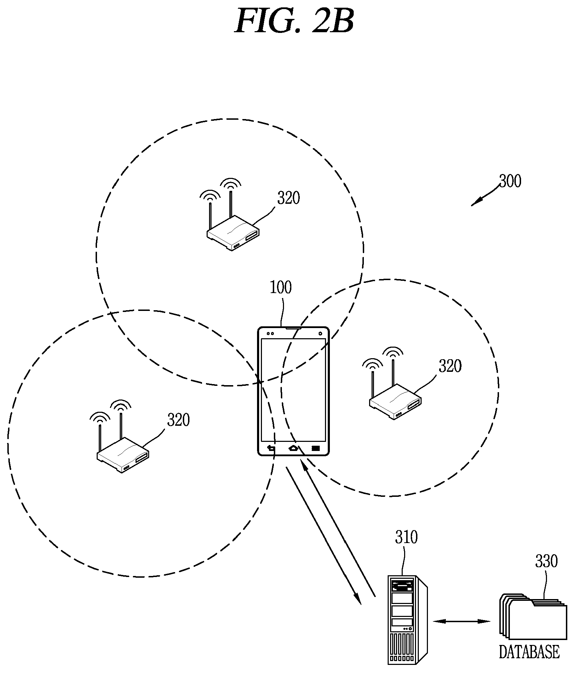

FIGS. 2A and 2B are conceptual views of a communication system operable with a mobile terminal in accordance with the present disclosure.

First, referring to FIG. 2A, such communication systems utilize different air interfaces and/or physical layers. Examples of such air interfaces utilized by the communication systems include Frequency Division Multiple Access (FDMA), Time Division Multiple Access (TDMA), Code Division Multiple Access (CDMA), and Universal Mobile Telecommunications System (UMTS), the Long Term Evolution (LTE) of the UMTS, the Global System for Mobile Communications (GSM), and the like.

By way of non-limiting example only, further description will relate to a CDMA communication system, but such teachings apply equally to other system types including the CDMA wireless communication system.

Referring now to FIG. 2A, a CDMA wireless communication system is shown having a plurality of mobile terminals 100, a plurality of base stations (BSs) 270, base station controllers (BSCs) 275, and a mobile switching center (MSC) 280. The MSC 280 is configured to interface with a conventional Public Switch Telephone Network (PSTN) 290. The MSC 280 is also configured to interface with the BSCs 275. The BSCs 275 are coupled to the base stations 270 via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs 275 can be included in the system as shown in FIG. 2A.

Each base station 270 may include one or more sectors, each sector having an omni-directional antenna or an antenna pointed in a particular direction radially away from the base station 270. Alternatively, each sector may include two or more different antennas. Each base station 270 may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations 270 may also be referred to as Base Station Transceiver Subsystems (BTSs). In some cases, the term "base station" may be used to refer collectively to a BSC 275, and one or more base stations 270. The base stations may also be denoted as "cell sites." Alternatively, individual sectors of a given base station 270 may be referred to as cell sites.

A broadcasting transmitter (BT) 295, as shown in FIG. 2A, transmits a broadcast signal to the mobile terminals 100 operating within the system. The broadcast receiving module 111 (FIG. 1 B) is typically configured inside the mobile terminal 100 to receive broadcast signals transmitted by the BT 295.

FIG. 2A further depicts several Global Positioning System (GPS) satellites 300. Such satellites 300 facilitate locating the position of at least one of plural mobile terminals 100. Two satellites are depicted in FIG. 2, but it is understood that useful position information may be obtained with greater or fewer satellites than two satellites. The GPS module 115 (FIG. 1 B) is typically configured to cooperate with the satellites 300 to obtain desired position information. It is to be appreciated that other types of position detection technology, (i.e., location technology that may be used in addition to or instead of GPS location technology) may alternatively be implemented. If desired, at least one of the GPS satellites 300 may alternatively or additionally be configured to provide satellite DMB transmissions.

During typical operation of the wireless communication system, the base stations 270 receive sets of reverse-link signals from various mobile terminals 100. The mobile terminals 100 are engaging in calls, messaging, and executing other communications. Each reverse-link signal received by a given base station 270 is processed within that base station 270. The resulting data is forwarded to an associated BSC 275. The BSC 275 provides call resource allocation and mobility management functionality including the orchestration of soft handoffs between base stations 270. The BSCs 275 also route the received data to the MSC 280, which then provides additional routing services for interfacing with the PSTN 290. Similarly, the PSTN 290 interfaces with the MSC 280, and the MSC 280 interfaces with the BSCs 275, which in turn control the base stations 270 to transmit sets of forward-link signals to the mobile terminals 100.

Hereinafter, description will be given of a method for acquiring location information of a mobile terminal using a wireless fidelity (WiFi) positioning system (WPS), with reference to FIG. 2B.

The WiFi positioning system (WPS) 300 refers to a location determination technology based on a wireless local area network (WLAN) using WiFi as a technology for tracking the location of the mobile terminal 100 using a WiFi module provided in the mobile terminal 100 and a wireless access point 320 for transmitting and receiving to and from the WiFi module.

The WiFi positioning system 300 may include a WiFi location determination server 310, a mobile terminal 100, a wireless access point (AP) 320 connected to the mobile terminal 100, and a database 330 stored with any wireless AP information.

The WiFi location determination server 310 extracts the information of the wireless AP 320 connected to the mobile terminal 100 based on a location information request message (or signal) of the mobile terminal 100. The information of the wireless AP 320 may be transmitted to the WiFi location determination server 310 through the mobile terminal 100 or transmitted to the WiFi location determination server 310 from the wireless AP 320.

The information of the wireless AP extracted based on the location information request message of the mobile terminal 100 may be at least one of MAC address, SSID, RSSI, channel information, privacy, network type, signal strength and noise strength.

The WiFi location determination server 310 receives the information of the wireless AP 320 connected to the mobile terminal 100 as described above, and compares the received wireless AP 320 information with information contained in the pre-established database 330 to extract (or analyze) the location information of the mobile terminal 100.

On the other hand, referring to FIG. 2B, as an example, the wireless AP connected to the mobile terminal 100 is illustrated as a first, a second, and a third wireless AP 320. However, the number of wireless APs connected to the mobile terminal 100 may be changed in various ways according to a wireless communication environment in which the mobile terminal 100 is located. When the mobile terminal 100 is connected to at least one of wireless APs, the WiFi positioning system 300 can track the location of the mobile terminal 100.

Next, considering the database 330 stored with any wireless AP information in more detail, various information of any wireless APs disposed at different locations may be stored in the database 330.

The information of any wireless APs stored in the database 330 may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like.

In this manner, any wireless AP information and location information corresponding to the any wireless AP are stored together in the database 330, and thus the WiFi location determination server 310 may retrieve wireless AP information corresponding to the information of the wireless AP 320 connected to the mobile terminal 100 from the database 330 to extract the location information matched to the searched wireless AP, thereby extracting the location information of the mobile terminal 100.

Furthermore, the extracted location information of the mobile terminal 100 may be transmitted to the mobile terminal 100 through the WiFi location determination server 310, thereby acquiring the location information of the mobile terminal 100.

Hereinafter, a mobile terminal according to an embodiment of the present disclosure as illustrated in FIG. 1 B or a mobile terminal disposed with the constituent elements of the mobile terminal or the structure of a mobile terminal will be described.

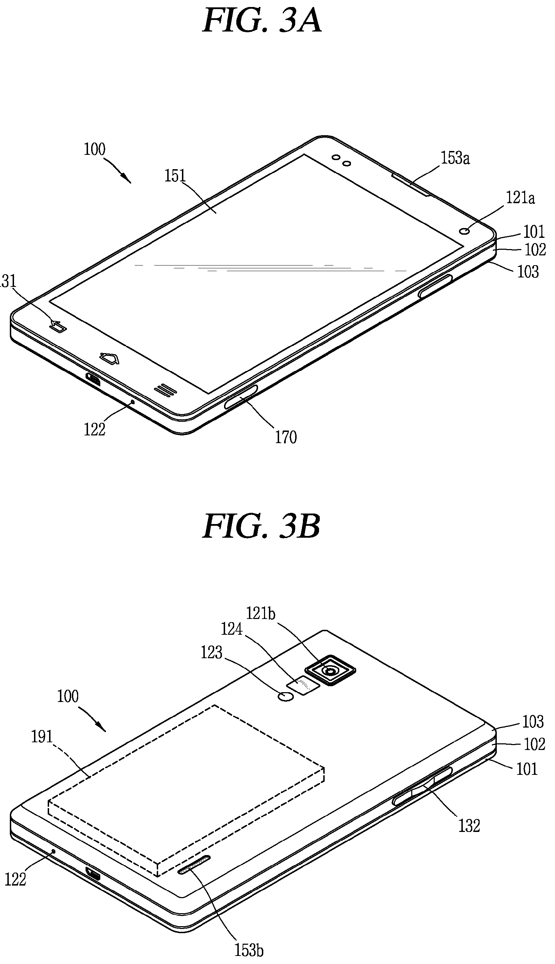

FIG. 3A is a front perspective view illustrating an example of the mobile terminal 100 associated with the present invention.

The mobile terminal 100 disclosed herein is provided with a bar-type terminal body. However, the present invention may not be limited to this, but also may be applicable to various structures such as watch type, clip type, glasses type or folder type, flip type, swing type, swivel type, or the like, in which two and more bodies are combined with each other in a relatively movable manner.

The body includes a case (casing, housing, cover, etc.) forming the appearance of the terminal. In this embodiment, the case may be divided into a front case 101 and a rear case 102. Various electronic components are incorporated into a space formed between the front case 101 and the rear case 102. At least one middle case may be additionally disposed between the front case 101 and the rear case 102, and a battery cover 103 for covering the battery 191 may be detachably configured at the rear case 102.

The cases may be formed by injection-molding a synthetic resin or may be also formed of a metal, for example, stainless steel (STS), titanium (Ti), or the like.

A display unit 151, a first audio output module 153a, a first camera 121 a, a first manipulating unit 131 and the like may be disposed on a front surface of the terminal body, and a microphone 122, an interface unit 170, a second manipulating unit 132 and the like may be provided on a lateral surface thereof.

The display unit 151 may be configured to display (output) information being processed in the mobile terminal 100. The display unit 151 may include at least one of a liquid crystal display (LCD), a thin film transistor-liquid crystal display (TFT-LCD), an organic light emitting diode (OLED) display, a flexible display, a 3-dimensional (3D) display, and an e-ink display.

The display unit 151 may include a touch sensing means to receive a control command by a touch method. When a touch is made to any one place on the display unit 151, the touch sensing means may be configured to sense this touch and enter the content corresponding to the touched place. The content entered by a touch method may be a text or numerical value, or a menu item capable of indication or designation in various modes.

The touch sensing means may be formed with transparency to allow visual information displayed on the display unit 151 to be seen, and may include a structure for enhancing the visibility of a touch screen at bright places. Referring to FIG. 3A, the display unit 151 occupies a most portion of the front surface of the front case 101.

The first audio output unit 153a and the first camera 121 a are disposed in a region adjacent to one of both ends of the display unit 151, and the first manipulation input unit 131 and the microphone 122 are disposed in a region adjacent to the other end thereof. The second manipulation interface 132 (refer to FIG. B), the interface 170, and the like may be disposed on a lateral surface of the terminal body.

The first audio output module 153a may be implemented in the form of a receiver for transferring voice sounds to the user's ear or a loud speaker for outputting various alarm sounds or multimedia reproduction sounds.

It may be configured such that the sounds generated from the first audio output module 153a are released along an assembly gap between the structural bodies. In this case, a hole independently formed to output audio sounds may not be seen or hidden in terms of appearance, thereby further simplifying the appearance of the mobile terminal 100. However, the present invention may not be limited to this, but a hole for releasing the sounds may be formed on the window.

The first camera 121 a processes video frames such as still or moving images obtained by the image sensor in a video call mode or capture mode. The processed video frames may be displayed on the display unit 151.

The user input unit 130 is manipulated to receive a command for controlling the operation of the mobile terminal 100. The user input unit 130 may include a first and a second manipulation unit 131, 132. The first and the second manipulation unit 131, 132 may be commonly referred to as a manipulating portion, and any method may be employed if it is a tactile manner allowing the user to perform manipulation with a tactile feeling such as touch, push, scroll or the like.

In the present drawing, it is illustrated on the basis that the first manipulation unit 131 is a touch key, but the present disclosure may not be necessarily limited to this. For example, the first manipulation unit 131 may be configured with a mechanical key, or a combination of a touch key and a mechanical key.

The content received by the first and/or second manipulation units 131, 132 may be set in various ways. For example, the first manipulation unit 131 may be used to receive a command such as menu, home key, cancel, search, or the like, and the second manipulation unit 132 may receive a command, such as controlling a volume level being outputted from the first audio output module 153a, or switching into a touch recognition mode of the display unit 151.

The microphone 122 may be formed to receive the user's voice, other sounds, or the like. The microphone 122 may be provided at a plurality of places, and configured to receive stereo sounds.

The interface unit 170 serves as a path allowing the mobile terminal 100 to exchange data with external devices. For example, the interface unit 170 may be at least one of a connection terminal for connecting to an earphone in a wired or wireless manner, a port for near field communication (for example, an Infrared Data Association (IrDA) port, a Bluetooth port, a wireless LAN port, and the like), and a power supply terminal for supplying power to the mobile terminal 100. The interface unit 170 may be implemented in the form of a socket for accommodating an external card such as Subscriber Identification Module (SIM) or User Identity Module (UIM), and a memory card for information storage.

FIG. 3B is a rear perspective view illustrating mobile terminal 100 illustrated in FIG. 3A.

Referring to FIG. 3B, a second camera 121b may be additionally mounted at a rear surface of the terminal body, namely, the rear case 102. The second camera 121b has an image capturing direction, which is substantially opposite to the direction of the first camera unit 121 a (refer to FIG. 3A), and may have a different number of pixels from that of the first camera unit 121 a.

For example, it is preferable that the first camera 121 a has a relatively small number of pixels enough not to cause difficulty when the user captures his or her own face and sends it to the other party during a video call or the like, and the second camera 121 b has a relatively large number of pixels since the user often captures a general object that is not sent immediately. The first and the second camera 121 a, 121 b may be provided in the terminal body in a rotatable and popupable manner.

Furthermore, a flash 123 and a mirror 124 may be additionally disposed adjacent to the second camera 121 b. The flash 123 illuminates light toward an object when capturing the object with the second camera 121b. The mirror 124 allows the user to look at his or her own face, or the like, in a reflected way when capturing himself or herself (in a self-portrait mode) by using the second camera 121 b.

A second audio output unit 153b may be additionally disposed at a rear surface of the terminal body. The second audio output unit 153b together with the first audio output unit 153a (refer to FIG. 3A) can implement a stereo function, and may be also used to implement a speaker phone mode during a phone call.

An antenna (not shown) for receiving broadcast signals may be additionally disposed at a lateral surface of the terminal body in addition to an antenna for making a phone call or the like. The antenna constituting part of the broadcast receiving module 111 (refer to FIG. 1) may be provided in the terminal body in a retractable manner.

A power supply unit 190 (refer to FIG. 1) for supplying power to the mobile terminal 100 may be mounted on the terminal body. The power supply unit 190 may be incorporated into the terminal body, or may include a battery 191 configured in a detachable manner on the outside of the terminal body. According to the drawing, it is illustrated that the battery cover 103 is combined with the rear case 102 to cover the battery 191, thereby restricting the battery 191 from being released and protecting the battery 191 from external shocks and foreign substances.

In a mobile terminal according to one embodiment disclosed herein, which may include at least one of those aforementioned components, a function of the mobile terminal can be controlled, in response to a tap or tap gesture of hitting a terminal body or a position out of the terminal body. That is, in the mobile terminal according to the one embodiment disclosed herein, a currently-executed function or application on the mobile terminal can be controlled in response to the tap. Also, a function, which is executable on the mobile terminal although it is not currently executed, can be executed on the mobile terminal according to the one embodiment disclosed herein. Therefore, the user can control at least one of functions executable on the mobile terminal by use of a simple gesture of tapping or hitting an object although touch pressure is not applied to the mobile terminal.

Hereinafter, description will be given in more detail of a mobile terminal capable of providing a new user interface in response to a tap of hitting an object, and a control method therefor, with reference to the accompanying drawings.

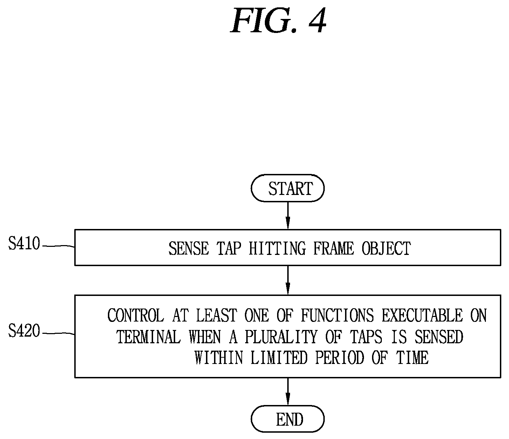

FIG. 4 is a flowchart illustrating a method for controlling a mobile terminal in accordance with one exemplary embodiment disclosed herein.

As illustrated in FIG. 4, in the mobile terminal according to the present invention, a process of sensing a tap of hitting an object is carried out (S410).

Here, a tap or tap gesture may refer to a gesture hitting the terminal body of the mobile terminal 100 or an object. In more detail, a tap may be understood as an operation of slightly hitting the terminal body of the mobile terminal 100 or an object with a tap object such as a finger and the like or an operation of allowing the tap object to be slightly brought into contact with the terminal body of the mobile terminal 100 or object.

Meanwhile, the tap object applying such a tap may denote a thing capable of applying an external force to the terminal body of the mobile terminal 100 or an object, for example, a finger (part with a fingerprint), a stylus pen, a pen, a pointer, a fist (finger joint) and the like. On the other hand, the tap object may not be necessarily limited to a thing capable of applying a touch input to a mobile terminal according to the present invention, and the type thereof does not matter if it is a thing capable of applying an external force to the terminal body of the mobile terminal 100 or object.

On the other hand, an object applied with a tap may include at least one of the terminal body and a position out of the terminal body. In other words, an input region of the mobile terminal may extend to an outside of the terminal body. Accordingly, a position capable of sensing the tap at a position out of the terminal body becomes a virtual input region.

Furthermore, the virtual input region may vary in the area according to a location or object on which the terminal is placed or the strength of a tap. For example, when the terminal is placed on a table, the movement of the terminal may be generated if the user hits the table, thereby sensing the tap therethrough. As a result, the virtual input region is increased as increasing the strength of the hitting. For another example, when the user holds the terminal body, the virtual input region may disappear.

Meanwhile, during the process of sensing the tap, it may be determined that "knockknock" (or "tocktock") for the purpose of controlling the mobile terminal is sensed only when at least two taps are applied within a limited period of time. For example, when one tap is applied once to the display unit 151 by a touch object capable of applying a touch to the display unit 151, the controller 180 may recognize the one tap as a touch input. That is, the controller 180 may not control a function corresponding to the one tap but control a function according to a touch input corresponding to the one tap (e.g., a function of selecting an icon output at a position to which the touch input is applied).

Therefore, the acceleration sensor 145 may generate a control signal for controlling one or more functions only when at least two taps (or a plurality of taps) are consecutively applied within a limited period of time.

That is, consecutively sensing at least two or more taps within a limited period of time may be referred to as "knockknock" ("tocktock"). For example, when a second tap is sensed within a limited period of time from a time point at which a first tap is sensed, it may be determined that "knockknock" is sensed. Accordingly, hereinafter, sensing "knockknock" may denote that hitting the terminal body or an object located at a position out of the terminal body has been substantially sensed a plural number of times.

Meanwhile, "knockknock" may refer to sensing a second tap hitting the terminal body or a position out of the terminal body by a second reference number of times or more within a limited period of time after sensing a first tap hitting the terminal body or a position out of the terminal body by a first reference number of times or more.

In this instance, the acceleration sensor 145 may switch the terminal into a ready state (or an active state) in response to the first tap sensed, and then generate a control signal for controlling the terminal when the second tap is applied. That is, the user can transfer information, which indicates that the mobile terminal is to be controlled by using taps, to the mobile terminal in a manner of first applying the first tap.

Here, the first reference number of times and the second reference number of times may be the same as each other or different from each other. For example, the first reference number of times may be three times and the second reference number of times may be two times. As another example, both of the first reference number of times and the second reference number of times may be more than two times.

In addition, the first and second taps of "knockknock" may be input in various patterns. For example, an operation of slightly hitting an object may correspond to a dot of Morse code, and an operation of not releasing a contact with an object for a predetermined period of time may correspond to a dash (line) of the Morse code. For example, 'knockknock,' 'knock-knock,' and 'knockknock-' may be when two taps are applied but may also be tap gestures generated in different patterns.

However, for the sake of explanation, the mobile terminal according to one exemplary embodiment will be described under assumption that the first reference number of times and the second reference number of times are all one time and have the same pattern.

In addition, the acceleration sensor 145 may determine that "knockknock" has been sensed only when the first and second taps was sensed within a "predetermined region" within the limited period of time. For example, "knockknock" may refer to a plurality of times of tapping which are successively sensed within a predetermined region within the limited period of time.

Here, the limited period of time may be a very short period of time, for example, a time within 300 microseconds (ms) to 2 seconds (s). Also, the predetermined region may refer to the same spot to which the taps have been applied or a narrow area that can be considered as the same spot.

To this end, when a first tap applied to the terminal body or an object is sensed by the acceleration sensor 145, the acceleration sensor 145 may calculate a predetermined region from a spot at which the first tap has been sensed. Also, when a second tap applied to the predetermined region is sensed within the limited period of time after the first tap was sensed, the acceleration sensor 145 may determine that "knockknock" has been sensed.

Meanwhile, the reference time and the predetermined region may be variously modified according to an embodiment.

In this manner, when "knockknock" applied to the terminal body or an object located at a position out of the terminal body is sensed, the acceleration sensor 145 may generate a control signal. The generated control signal may then be transferred to the controller 180.

Next, when the plurality of taps ('knockknock) is sensed within a limited period of time, at least one of functions executable on the terminal may be carried out (S420). That is, the controller 180 may control at least one of functions executable on the terminal, in response to the control signal.

Here, the functions executable on the terminal may refer to all types of functions which can be executed or activated on the mobile terminal. For example, one of the executable functions may be an application installed on the mobile terminal. For example, 'executing an arbitrary function' may refer to 'activating or driving an arbitrary application.'

For another example, the function executable on the mobile terminal may be a function of receiving an event. Here, the received event may be a message reception event, a call reception event and the like. The event may be an event generated from an application installed on the mobile terminal.

For still another example, the function executable on the mobile terminal may be a function required for a basic operation of the mobile terminal. Examples of the function required for the basic operation of the mobile terminal may include a function of turning on/off a light (or lamp) provided in the display unit 151, a function of switching the mobile terminal from an unlock state into a lock state or vice versa, a function of setting a communication network, a function of changing setting information related to the mobile terminal, and the like.

In this manner, according to the present invention, the controller 180 may control at least one of the executable functions on the mobile terminal, in response to a control signal.

Meanwhile, the control signal may vary according to a characteristic of "knockknock." Here, the characteristic of "knockknock" may be involved in at least one of a number of applied taps, a position of a tap, a speed of a tap, strength of a tap, a pattern of a tap and a region of a tap. For example, the acceleration sensor 145 may generate a first control signal when the tap is applied "twice," and a second control signal when the tap is applied "three times." The controller 180 may also control functions corresponding to the first and second control signals.

The controller 180 may change, in response to the control signal, setting information related to a currently-executed function or a function corresponding to screen information output on the display unit 151 of currently-executed functions. In this instance, the controller 180 may output guide information related to setting information, which is controllable according to an applied position of "knockknock," on the display unit 151.

Here, the function controlled in response to the control signal generated by "knockknock" may vary according to a current state of the mobile terminal or a characteristic of "knockknock."

Hereinafter, the state of the mobile terminal will be described in more detail. When "knockknock" is sensed, the controller 180 may perform a different type of control according to a state of the mobile terminal, namely, a function currently executed on the mobile terminal, a type of screen information currently output on the display unit 151, an application corresponding to screen information currently output on the display unit 151, a turn-on/off state of a lamp of the display unit 151, a lock/unlock state of the mobile terminal and the like.

In more detail, even when the same "knockknock" is sensed, the controller 180 may execute "voice recognition function" in the turn-off state of the lamp of the display unit 151, execute a control for an application involved in currently-output screen information in the turn-on state of the lamp of the display unit 151, or release a lock state to output a home screen page on the display unit 151 if the currently-output screen information is a lock screen.

Also, the function executable in response to a tap applied to the terminal body or a position out of the terminal body (or an object on which the terminal body is placed) may be a function of changing settings of a function currently executed on the mobile terminal, a function of changing settings of an application involved in screen information currently output on the mobile terminal, or a function of changing settings of a function corresponding to screen information currently output on the mobile terminal.

Hereinafter, the characteristic of "knockknock" will be described. The acceleration sensor 145 may generate a different control signal based on an applied position of a tap, a component (microphone, speaker, etc.) located at a tap-applied position, strength of a tap, a speed of a tap, an area of a tap, a pattern of a tap, and the like. That is, the controller 180 may control a different function according to the characteristic of "knockknock." Or, the control signal may include information related to the characteristic of "knockknock" and the controller 180 may control a different function using the information included in the control signal.

Hereinafter, a method of sensing "knockknock" will be described in detail, and a method of controlling a mobile terminal according to the control method illustrated in FIG. 4 will be described in more detail with reference to the accompanying drawings.

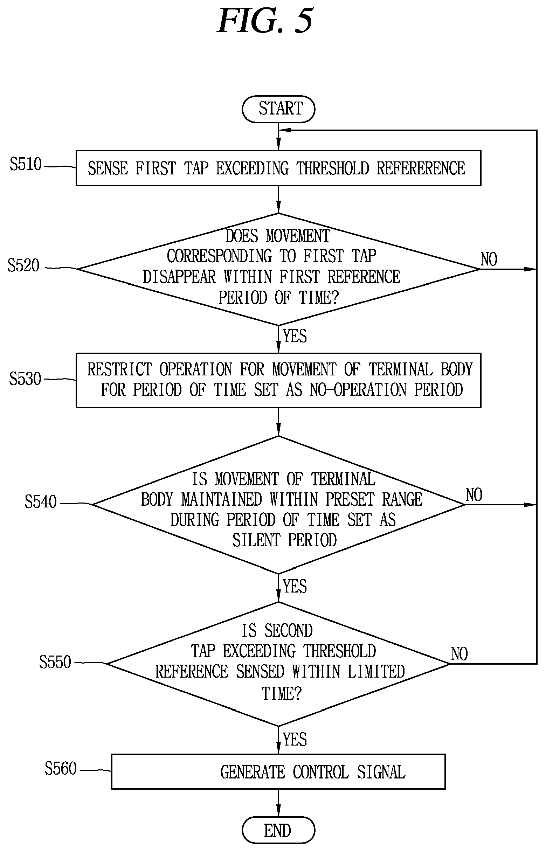

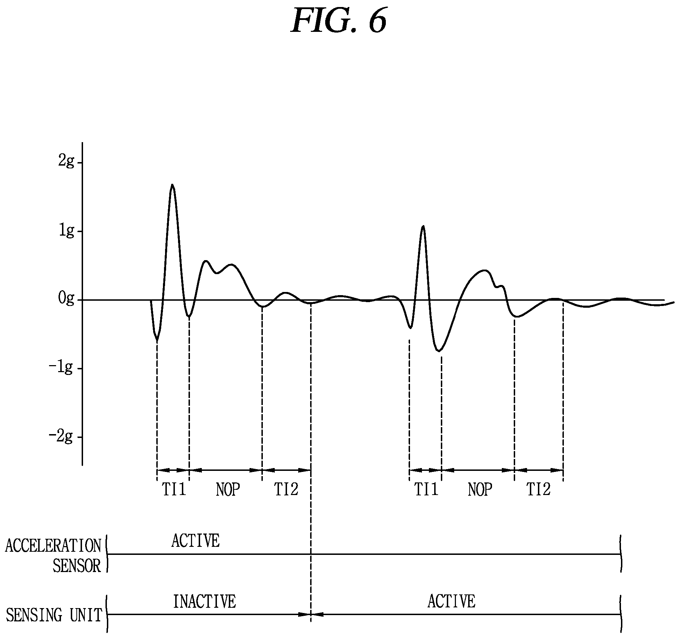

First, the method of sensing "knockknock" will be described. FIG. 5 is a flowchart illustrating the control method illustrated in FIG. 4 in more detail, and FIG. 6 is a view illustrating a method of sensing a tap by an acceleration sensor according to the control method illustrated in FIG. 5.

The acceleration sensor 145 (see FIG. 1) of the mobile terminal according to the one exemplary embodiment may sense a movement of the terminal body based on at least one of X, Y and Z axes, and generate an acceleration signal corresponding to the sensed movement of the terminal body. For example, an acceleration signal on the X axis according to the movement of the terminal body is exemplarily illustrated in FIG. 6.

Referring back to FIG. 5, the acceleration sensor 145 may sense a first tap exceeding a threshold reference (S510). The threshold reference is for preventing a malfunction of the acceleration sensor 145, and may be a reference for determining whether or not a tap for generating a control signal has been sensed.

In this instance, the acceleration sensor 145 may compare a difference value between an n^{th} generated acceleration signal and an n-1^{th} generated acceleration signal with the threshold reference, to determine whether or not the movement of the terminal body was generated by the first tap. When the difference between the acceleration signals is greater than the threshold reference, it can be determined that the first tap has been applied.

Afterwards, the acceleration sensor 145 may determine whether or not the movement of the terminal body corresponding to the first tap disappears within a first reference time TI1. For example, when the terminal falls from the sky to the ground, the movement exceeding the threshold reference may continuously be sensed. Since this instance cannot be determined that the first tap has been sensed, if the movement corresponding to the first tap does not disappear within the first reference time TI1, the process may go back to the previous step.

Next, a calculation (or operation) with respect to the movement of the terminal body may be restricted for a period of time (NOP) which was set as a no-operation period (S530). For example, when tapping an object like a person knocking on the object, a movement exceeding the threshold reference may be sensed at the time point of tapping the object, and thereafter the terminal body may be moved (or vibrated) due to an aftershock of the tapping. To prevent the malfunction of the terminal due to the aftershock, the acceleration sensor 145 may ignore (reject) an acceleration signal which is generated during the period of time set as the no-operation period.

It may then be determined whether or not the movement of the terminal body is maintained within a preset range during a period of time TI2 which was set as a silent period (S540).

For example, when the user shakes a hand up and down with holding the terminal body with the hand, the movement exceeding the threshold reference may continuously be sensed. When the movement exceeding the threshold reference is continuously sensed even after the lapse of the period of time set as the no-operation period, it may be determined that a tap has been sensed. Therefore, the movement (or vibration) of the terminal should not be sensed for the predetermined period of time TI2 after the aftershock due to the first tap disappears.

That is, if the movement of the terminal body does not belong to the preset range for the period of time TI2 set as the silent period after the lapse of the period of time NOP set as the no-operation period, the process may go back to the first step. In this instance, the preset range may refer to a range in which it can be determined that the terminal body is not moved.

Then, it may be determined whether or not a second tap which exceeds the threshold reference is sensed within a limited period of time (S550). That is, it can be determined that "knockknock" has been sensed only when a time from the sensed time point of the first tap to the sensed time point of the second tap is within the limited period of time. If the second tap is not sensed within the limited period of time, the process may go back to the first step.

When "knockknock" is sensed, a control signal may be generated (S560). The control signal may vary according to peaks of the first and second taps corresponding to the characteristic of "knockknock," a time taken from the sensed time point of the first tap to the sensed time point of the second tap, and positions to which the first and second tap were applied, or may include information related to the characteristic of "knockknock." The controller 180 may control at least one of functions controllable on the terminal using the control signal.

Meanwhile, referring to FIG. 6, the acceleration sensor of the mobile terminal according to the one exemplary embodiment disclosed herein may be continuously in an active state (always-on state) while power is supplied to the controller. That is, even when a sleep mode in which the other components except for necessary components are deactivated for minimizing battery consumption is executed, the acceleration sensor 145 may always sense the movement of the terminal body and generate the control signal in response to "knockknock" being sensed, even if the battery is run down.

On the other hand, the sensing unit including the remaining sensors except for the acceleration sensor may be deactivated in the sleep mode. When the first tap is sensed by the acceleration sensor in the inactive (deactivated) state, the sensing unit may be activated and sense the second tap. The sensing unit may include a touch sensor, a microphone sensor, a proximity sensor, an RGB sensor, a pressure sensor and the like, and be used for discerning the characteristic of "knockknock" (strength of a tap, a position of a tap, a time interval between a first tap and a second tap, an object of a tap, etc.).

For example, the touch sensor may be disposed at the body to sense a second tap using a touch generated from the body. Furthermore, the touch sensor may produce a location to which a second tap is applied, and discern the object (for example, finger, nail, palm, etc.) of the second tap using a touched area of the second tap.

For another example, the microphone sensor may sense a second tap using a sound generated around the terminal body. Also, since the sound has its inherent frequency characteristic, the microphone sensor may discern an object (e.g., finger, nail, palm, pen, etc.) of the second tap and patterns of the first tap and the second tap using the frequency characteristic of received sound information.

For another example, the proximity sensor may sense the second tap using existence or non-existence of an object adjacent to the terminal body. When the proximity sensor detects an object located adjacent to a front surface of the terminal body, the controller 180 may reject the control signal generated by the acceleration sensor. It is because the mobile terminal 100 put in a bag is likely to cause a malfunction due to shaking of the bag.

For another example, the RGB sensor may sense a color of an object applying the second tap, and discern a type of the object using the sensed color.

For another example, the pressure sensor may sense the second tap using pressure applied to the terminal body, and calculate strength of pressure generated by the second tap.

For another example, a piezo sensor (or shock sensor) using a property in which electricity is generated from a surface of a crystal when pressure is applied in a particular direction may sense a second tap. Since the piezo sensor can sense a motion corresponding to several thousands of hertz (kHz) while the acceleration sensor senses a motion corresponding to several hundreds of hertz (Hz), the movement (shock) of a terminal may be sensed in a more accurate manner.

In addition, the controller 180 may recognize the object and pattern of the foregoing tap using the piezo sensor. More specifically, the piezo sensor may recognize the object and pattern of a tap using an experimentally acquired physical pattern since the physical pattern generated therefrom is different according to an object generating a shock on the body or the pattern of a tap. The experimentally-acquired physical pattern may be prepared during the factory shipment to be stored in the memory 160, and periodically updated or changed by the user.

Meanwhile, when the second tap is not sensed within the limited period of time, the sensing unit except for the acceleration sensor may be deactivated for preventing battery consumption.

In this instance, the controller 180 may perform a control by "knockknock" only when both of the acceleration sensor and the sensing unit sense the second tap. The malfunction of the terminal can be prevented because of the use of the various sensors. Also, power can efficiently be used because the other sensors except for the acceleration sensor are activated only for a limited period of time after the first tap is sensed.

When a tap is applied by a tap object, a signal which exceeds a threshold reference may be generated from only one of the three axes of the acceleration sensor. On the other hand, when the terminal falls on the floor, or is placed on a thing, a movement similar to "knockknock" may be sensed. In this instance, signals exceeding the threshold reference may be generated from at least two axes. Therefore, after the movement exceeding the threshold reference is sensed at one axis, when the movement exceeding the threshold reference is also sensed even at another axis, the corresponding movement may be rejected.

In addition, various methods for preventing the malfunction of the mobile terminal caused due to "knockknock" may be applied to the mobile terminal.

Meanwhile, the mobile terminal according to the exemplary embodiment disclosed herein may include an exclusive processor (Micro Control Unit; hereinafter, referred to as 'MCU') for controlling sensors. The MCU may serve as a hub of the sensors. The MCU may collect signals from the sensors, and determine whether or not "knockknock" has been applied. That is, the MCU may generate a control signal by combining the signals from the sensors.

The MCU, other than a central processing unit (Application Processor; referred to as 'AP') which is a main processor of the terminal, may collect the signals of the sensors and generate the control signal. That is, the MCU may be in an always-on state while power is supplied even in a state that the AP is driven in a low-power mode in response to an execution of a sleep mode. When "knockknock" is sensed, the MCU may activate the AP using the control signal, which may result in providing a new effect of remarkably reducing power consumption.

Also, the MCU may activate other sensors to sense a second tap, in response to a first tap sensed by the acceleration sensor. The plurality of sensors can be controlled by the MCU and the MCU can determine whether or not "knockknock" has been applied using the plurality of sensors. This may allow for preventing an occurrence of a malfunction in advance.

In addition, the MCU may be provided with an algorithm for recognizing the characteristic of "knockknock" and the like, and thus determine the characteristic of "knockknock" using all of the signals of the sensors.

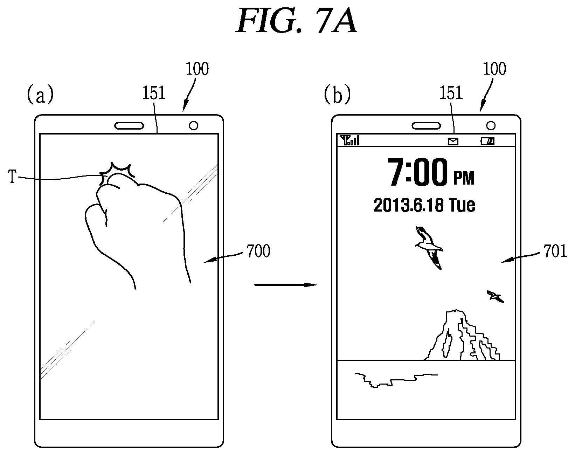

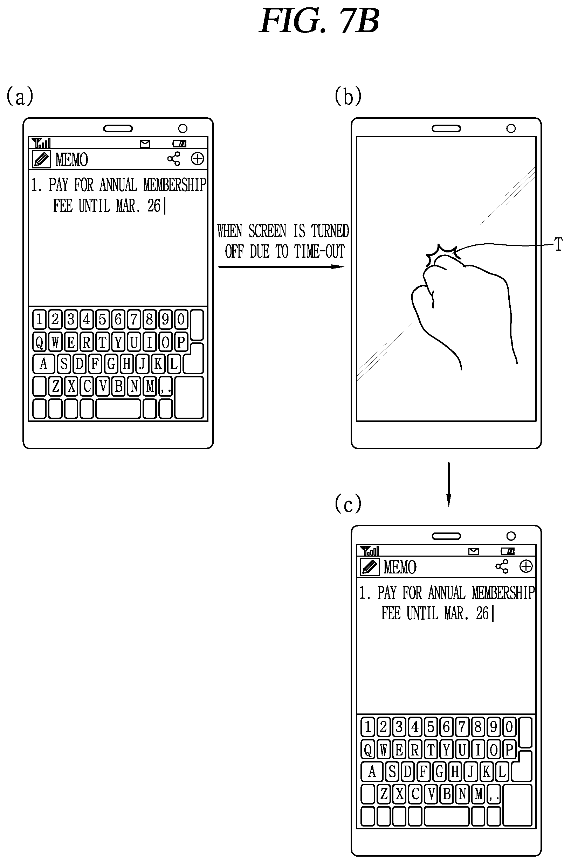

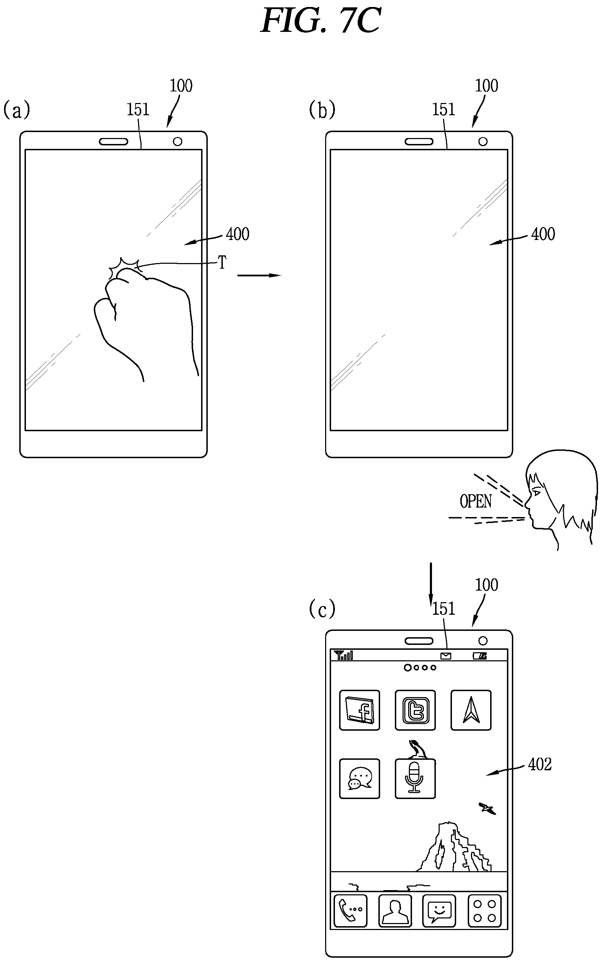

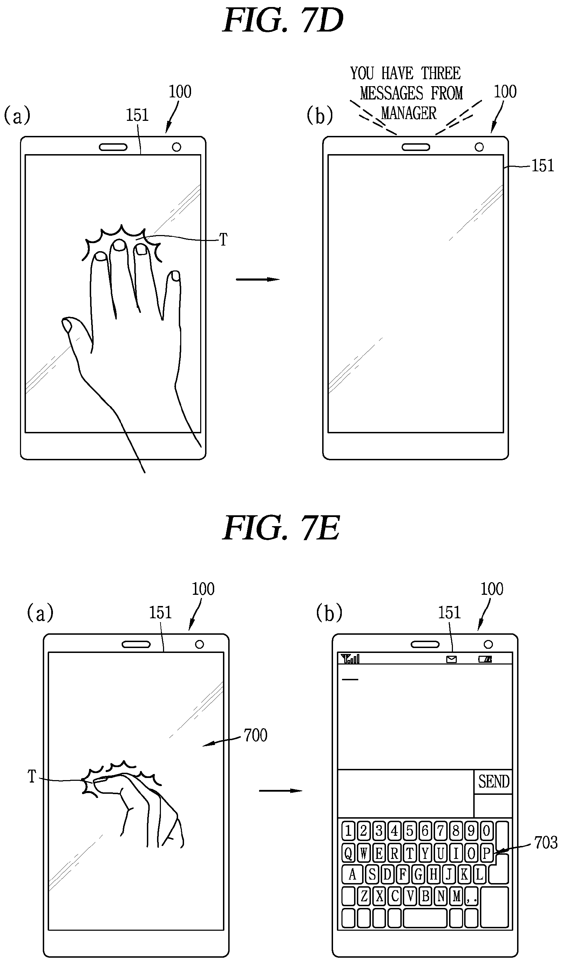

Hereinafter, a method of controlling the mobile terminal according to the control method illustrated in FIG. 4 will be described. FIGS. 7A, 7B, 7C, 7D and 7D are conceptual views illustrating the control method illustrated in FIG. 4. FIGS. 7A to 7D exemplarily illustrate the mobile terminal which controls a function in response to "knockknock" while the display unit 151 is in an inactive state (or off state).

In the mobile terminal according to the present invention, it may be possible to sense a tap or hit applied to the terminal body or a position out of the terminal body even in an inactive state of the display unit 151. In this manner, when the terminal body or the position out of the terminal body is tapped or hit in the inactive state of the display unit 151, the controller 180 may switch the display unit 151 into an active state. That is, the controller 180 may turn on a lamp or light of the display unit 151 in response to "knockknock" T being sensed. In this instance, if the mobile terminal is in a lock state, a lock screen may be output on the display unit 151.

Also, various types of information may be output as the display unit 151 is activated. The controller 180 may output a different type of information according to a tapped position on the display unit 151. For example, as illustrated in (a) of FIG. 7A, when "knockknock" T is applied to a region 710 (a location of this region may differ according to a mobile terminal) for outputting visual information on the lock screen, the controller 180 may turn on the display unit 151, and output screen information 701 involved in time information, as illustrated in (b) of FIG. 7A. The screen information may include various types of time information, such as current time information, world time information and the like. Also, the mobile terminal may be in a lock state while the screen information 701 is output. Therefore, the user can convert the lock state into an unlock state by using a touch or the like with respect to the display unit 151.

Although not illustrated, when "knockknock" T is applied to a region corresponding to an arranged position of a home button, the controller 180 may switch the lock state into the unlock state and output a home screen page. A screen which is first output when the lock state is switched into the unlock state may not always be the home screen page. For example, the screen which is first output on the display unit 151 when the lock state is switched into the unlock state may output screen information which has recently been output on the display unit 151 prior to executing the lock state.

Meanwhile, the home button may allow for outputting the home screen page on the display unit 151 in response to being pressed (or selected), irrespective of a function which is currently executed on the mobile terminal. That is, when the home button is pressed or touched, the controller 180 may output the home screen page on the display unit 151. On the other hand, even if the home button is pressed, the home screen page may not be output when the mobile terminal is in the lock state. Also, the home button may be implemented as a hardware key or a virtual key.

Without a limit to the embodiment that "knockknock" T is applied to the position of the home button, the controller 180 may control a function corresponding to a key (e.g., volume key, power key, etc.), which is involved in another function, in response to "knockknock" T being applied to an arranged region of the key.

Also, in the mobile terminal disclosed herein, as illustrated in (a) of FIG. 7B, when a control command is not applied to the mobile terminal during a predetermined period of time while an arbitrary function (e.g., a memo function application) is executed, as illustrated in (b) of FIG. 7B, the display unit 151 may be turned off (this instance can be expressed like 'the display unit 151 has been turned off due to time-out'). In this instance, when "knockknock" T is applied, as illustrated in (c) of FIG. 7B, the controller 180 may re-output screen information which has been output before the display unit 151 is lighted off.

Meanwhile, as illustrated in (a) of FIG. 7B, if an arbitrary function was in an active state, for example, a text input function was in an active state on the memo function application, when the screen information is output again in response to "knockknock" T, as illustrated in (c) of FIG. 7B, the controller 180 may equally activate the arbitrary function (e.g., text input function).

For another example, when a specific function is currently executed on the mobile terminal in a light-off state of the display unit 151 (this state may be considered as a lock state), the controller 180 may control the specific function in response to "knockknock" T sensed in the light-off state of the display unit 151.

In this manner, the mobile terminal according to the present invention can perform a different control according to "knockknock" T applied to a different position. Also, the different position may be a position which the user can typically and ideally recognize, and the controller 180 can thus provide user experience (UX) which is more familiar to the user.

When a first tap is sensed, the controller 180 may output guide information related to a function to be controlled in response to a second tap applied. The guide information may be information for guiding a position to which the second tap is to be applied, or information related to a function to be controlled according to the second tap. The guide information may also be output in at least one of visible, audible and tactile manners.

Meanwhile, the controller 180 may control only a music reproduction function while the light of the display unit 151 is deactivated. In this manner, when a specific function is currently executed in an inactive state of the display unit 151, the controller 180 may control the specific function with maintaining the inactive state of the display unit 151, in response to a sensed tap. This may result in a reduction of power consumption, which is caused due to turning the display unit 151 on.

In the mobile terminal in accordance with one exemplary embodiment disclosed herein, as illustrated in (a) of FIG. 7C, when "knockknock" T is applied in an inactive state of the display unit 151, a voice recognition function may be activated as illustrated in (b) of FIG. 7C. Therefore, the controller 180 may activate or execute a function involved in a voice command word when the voice command word is input by the user.

For example, as illustrated in (b) of FIG. 7C, when a voice command word (e.g., "Open") for releasing a lock state, the controller 180, as illustrated in (c) of FIG. 7C, the controller 180 may switch the lock state into an unlock state and turn the display unit 151 on.

Meanwhile, the controller 180 may output notification information notifying that the voice recognition function has been activated, in at least one of visible, tactile and audible manners. When the notification information is output in the visible manner, the controller 180 may output the notification information by activating only a part of the display unit 151.

When the characteristic of the sensed "knockknock" T meets a preset condition, the controller 180 may perform a function which has previously matched the applied "knockknock." For example, when "knockknock" with a first characteristic is sensed, the controller 180 may execute a matched first function. When "knockknock" with a second characteristic different from the first characteristic is sensed, the controller 180 may execute a matched second function. The execution of the first or second function may be enabled only when the state of the mobile terminal meets a specific condition. For example, if it has been set that the first function is executed only when a tap with a first characteristic is sensed in a lock state, the controller 180 may not execute the first function even though "knockknock" with the first characteristic is sensed in an unlock state.

As one example, "knockknock" T with a first characteristic may be "knockknock" T with a predetermined area or more. As illustrated in 7D, when "knockknock" T with a predetermined area or more is sensed on the display unit 151, the controller 180 may execute a function which matches the first characteristic. Here, the function which matches the first characteristic may be a function of outputting context information by voice. Therefore, when "knockknock" T with the predetermined area or more is sensed, the controller 180 may output the context information (e.g., event reception information, current time information, weather information, status information (battery, communication state, location, etc.) related to the mobile terminal and the like). Meanwhile, even though "knockknock" T applied to the predetermined area or more is sensed, if the status of the mobile terminal does not meet a preset condition (e.g., a condition that the mobile terminal is in a light-off state or a condition that the mobile terminal is in a lock state), the controller 180 may not execute the function which matches the first characteristic.

For another example, as illustrated in (a) of FIG. 7E, when "knockknock" T with a second characteristic different from the first characteristic is sensed (e.g., "knockknock" sequentially applied to different regions), the controller 180 may execute a function which matches the second characteristic. For example, when "knockknock" T with the second characteristic is "knockknock" T sequentially applied to different regions, the controller 180 may output a virtual keyboard (or visual keyboard) for the user to input information. Meanwhile, "knockknock" T sequentially applied to the different regions may be an operation such as the user inputting information through a keyboard. When such "knockknock" T corresponding to the operation is sensed, the controller 180 may output the keyboard so as to provide a more familiar UX to the user.

As described above, the user of the mobile terminal according to the present invention can control the mobile terminal merely by tapping or hitting the mobile terminal in an inactive state of the display unit. That is, the mobile terminal according to the present invention can provide a more intuitive and relatively simple user interface environment to the user.

In addition, in the mobile terminal disclosed herein, when "knockknock" is applied to the terminal body or a position out of the terminal body in an active state of the display unit 151, screen information output on the display unit 151 or an application corresponding to the screen information can be controlled. For example, the controller 180 may change settings of the application corresponding to the screen information or setting information related to information which is output through the application. Also, the controller 180 may execute a different control according to a position to which "knockknock" is applied.

Hereinafter, description will be given in detail of a method of executing a different function according to a characteristic of "knockknock" in a mobile terminal in accordance with one exemplary embodiment disclosed herein.

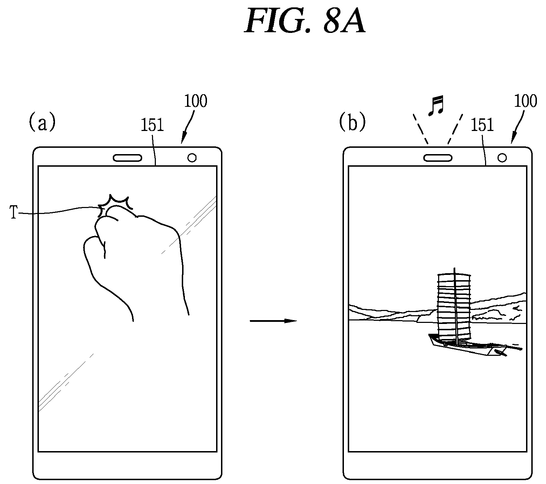

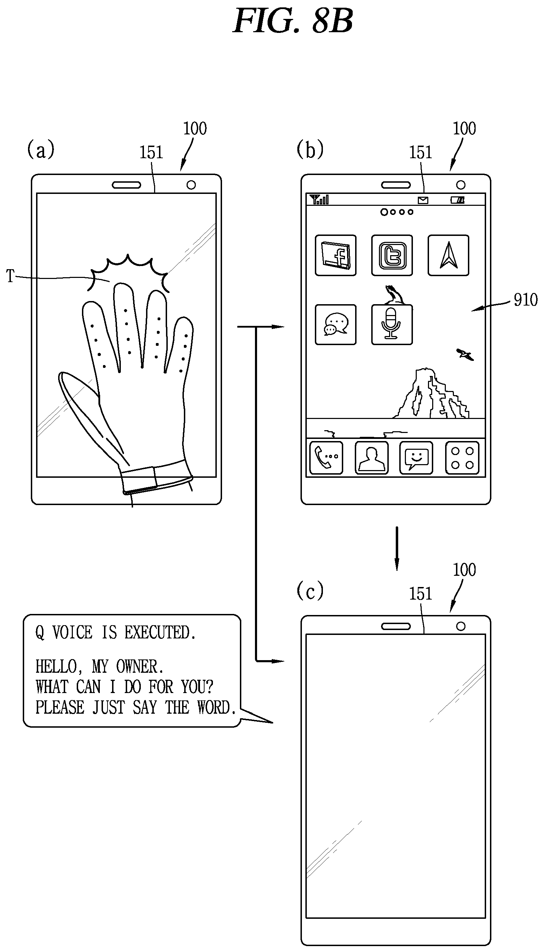

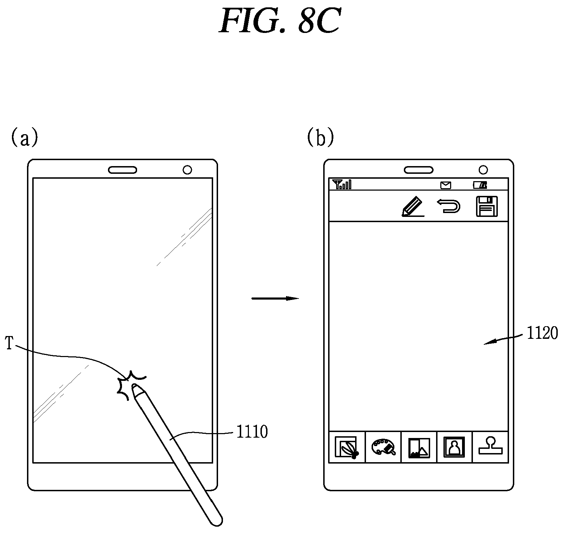

FIGS. 8A, 8B and 8C are conceptual views illustrating a method of executing a different function according to a tap object (an object to apply a tap) in a mobile terminal in accordance with one exemplary embodiment disclosed herein. A type of the tap object may be discerned according to at least one sensor aforementioned with reference to FIG. 6. And, the controller 180 of the mobile terminal disclosed herein can immediately execute a function, which matches a corresponding attribute, according to the type of the tap object.

For example, as illustrated in (a) of FIG. 8A, when "knockknock" T is applied to the terminal body with a knuckle, the controller 180, as illustrated in (b) of FIG. 8A, the controller 180 may output at least one of music and image. Here, the output music and image may be preset by the user, or automatically selected by the controller 180.

The controller 180 may control different types of music and images to be output according to strength of "knockknock" T. For example, when "knockknock" T is very strongly applied, a soft music may be output.

For another example, when "knockknock" T is applied to the terminal body with a finger (a side with a fingerprint), the controller 180 may execute an application associated with a social networking service (SNS), such as Facebook, and output an execution screen of the application on the display unit 151. The executed application may be changed by user setting.

As illustrated in (a) of FIG. 8B, when "knockknock" T is applied to the terminal body 100 (or the display unit 151) with a tap object which is touch-unrecognizable, the controller 180 may immediately release a lock state as illustrated in (b) of FIG. 8B or execute a voice recognition function as illustrated in (c) of FIG. 8B. Here, the touch-unrecognizable tap object may be a hand of the user who wears gloves.

As illustrated in (a) of FIG. 8C, when "knockknock" T is applied to the terminal body 100 (or the display unit 151) with a touch pen (or a stylus pen), as illustrated in (b) of FIG. 8C, the controller 180 may immediately activate a memo function (or a memo application).

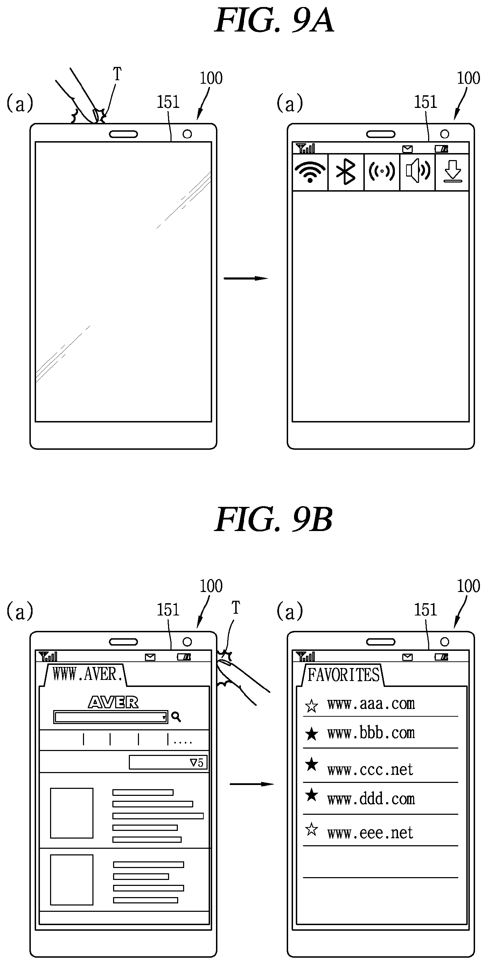

FIGS. 9A, 9B, 9C, 10A, 10B and 11 are conceptual views illustrating a method of executing a different function according to a position to be tapped (or tap position) in a mobile terminal in accordance with one exemplary embodiment disclosed herein.

In the mobile terminal disclosed herein, a different function can be controlled according to a tap position (or a position to which "knockknock" is applied).

For example, as illustrated in FIG. 9A, when "knockknock" T is applied to a top of the terminal body 100, a task manager screen may be output on the display unit 151. The task manager screen may include information related to at least one currently-executed application, information related to a generated event, and short icons.

The task manager screen may be closed in response to "knockknock" T being re-applied to the top of the terminal body 100. Also, after the output of the task manager screen, when a user input is not applied for a preset period of time, the display unit 151 may automatically be deactivated.

For another example, as illustrated in FIG. 9B, when "knockknock" T is applied to a side surface of the terminal body 100 while outputting a screen in response to an execution of a web browser, the controller 180 may output a favourite screen for the web browser.

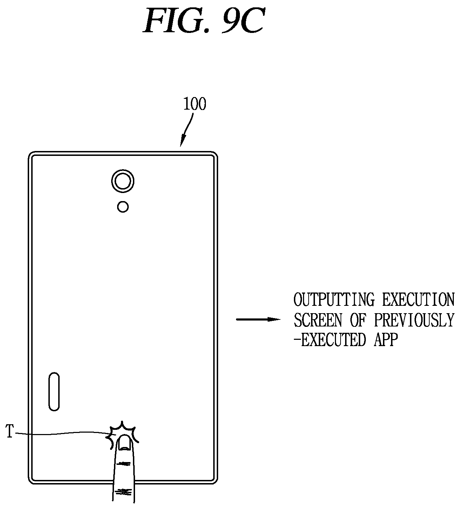

For another example, as illustrated in FIG. 9C, when "knockknock" T is sensed on the rear case 102 (see FIG. 1), the controller 180 may output an execution screen of a previously-executed application on the display unit 151. That is, a screen switching function may be executed in response to "knockknock" T applied to the rear case 102 (see FIG. 1).

Or, when "knockknock" T is sensed on the rear case 102, the controller 180 may terminate at least one of a plurality of applications which are currently executed, and output an execution screen of another application of the plurality of applications on the display unit 151. Also, the controller 180 may sequentially terminate the plurality of currently-executed applications every time when "knockknock" T is applied.

Although not illustrated, when "knockknock" T is applied to the rear case 102 and an object adjacent to a front surface of the terminal body is sensed by the proximity sensor, the controller 180 may execute a function involved in "voice." In this instance, the display unit 151 is very likely to be unavailable, and thus the execution of the function involve in "voice" can enhance user convenience.

The controller 180 may output through a voice current context information related to the mobile terminal (e.g., event reception information, current time information, weather information, status information (battery, communication state, location, etc.) regarding the mobile terminal. The controller 180 may also successively execute the voice recognition function after completely outputting the context information.

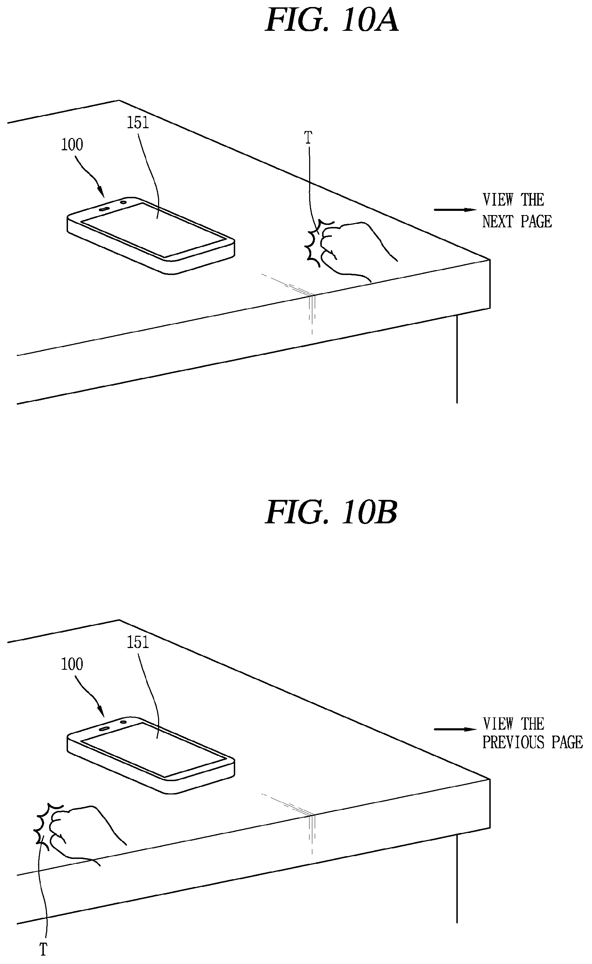

A tap position or a position to be tapped may be located out of the terminal body, not on the terminal body. Referring to FIGS. 10A and 10b, when "knockknock" T is applied to an object on which the terminal body is placed, the mobile terminal 100 can sense "knockknock" T applied to the position out of the terminal body.

In this instance, a different function can be executed according to an applied position of "knockknock" T based on the terminal body. For example, in a state that an image is currently output on the display unit 151 in response to an execution of an application associated with photos or books, the controller 180 may output a next image instead of the current image when "knockknock" T is applied to a right side of the terminal body 100, and a previous image instead of the current image when "knockknock" T is applied to a left side of the terminal body 100.

For another example, in a state that a music is currently reproduced in response to an execution of a music-associated application, the controller 180 may output or reproduce a next music instead of the currently-reproduced music when "knockknock" T is applied to a right side of the terminal body 100 and a previous music instead of the currently-reproduced music when "knockknock" T is applied to a left side of the terminal body 100.

As such, in the mobile terminal disclosed herein, a different control can be executed according to "knockknock" T applied to a different position. Also, the different position may be a position which the user can typically and ideally recognize, and the controller 180 can thus provide user experience (UX) which is more familiar to the user.

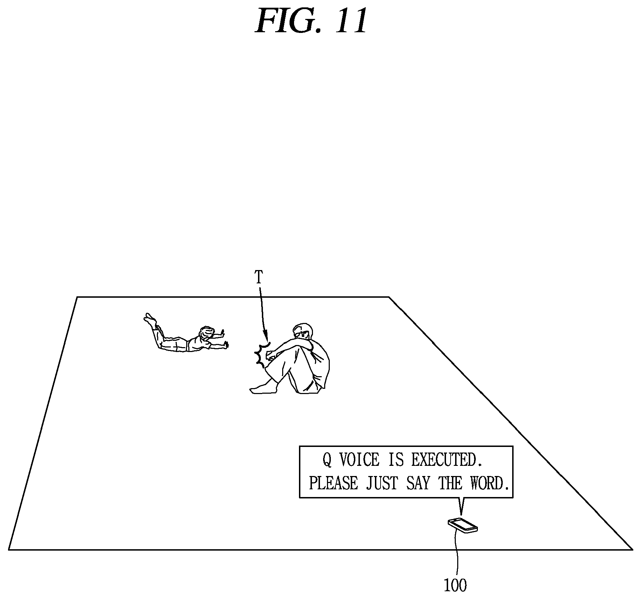

As illustrated in FIG. 11, when "knockknock" T is applied to an object adjacent to the terminal body 100, other than the terminal body 100, the controller 180 may output notification information. That is, in the mobile terminal disclosed herein, in order to notify a position of the terminal when the user does not know where the terminal is placed, notification information may be output when "knockknock" T is applied to the adjacent object. The notification information may be output in at least one of visible, tactile (e.g., vibration) and audible manners.

In this instance, the controller 180 may output the notification information only when a tap applied to the adjacent object is sensed from a predetermined distance or more or within the predetermined distance based on the terminal body.

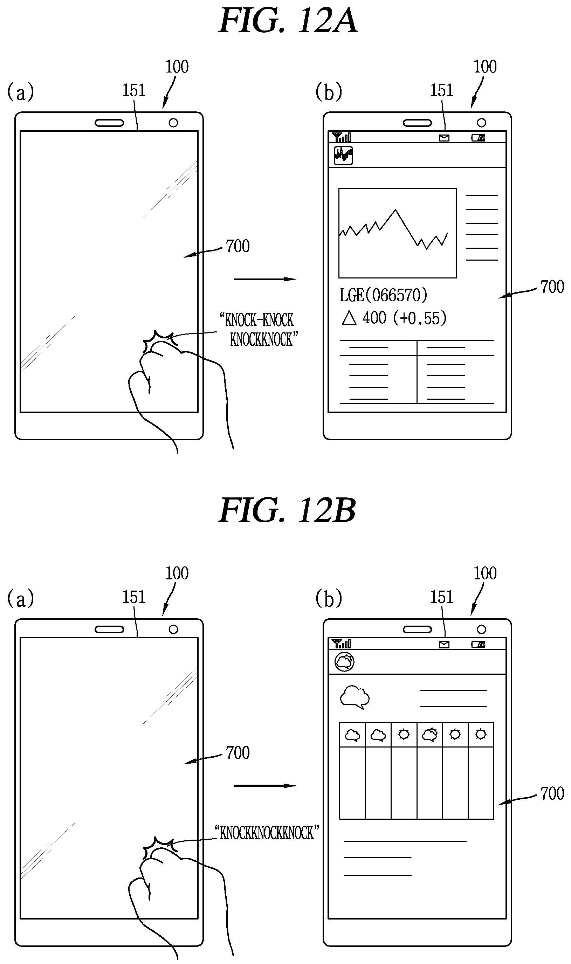

FIGS. 12A and 12B are conceptual views illustrating a method of executing a different function according to a tap pattern in a mobile terminal in accordance with one exemplary embodiment disclosed herein.

The mobile terminal according to one exemplary embodiment disclosed herein may discern a pattern of "knockknock" using the acceleration sensor 145 and other sensors. For example, the acceleration sensor 145 may generate a first control signal when "knockknock" is applied in a first pattern, and a second control signal when "knockknock" is applied in a second pattern. The controller 180 may also control functions corresponding to the first and second control signals.

Referring to FIGS. 12A and 12B, when "knockknock" is applied in an inactive state of the display unit 151, a different function may be executed according to a pattern of the applied "knockknock." For example, a stock-associated application may be executed when a pattern of "knock-knockknockknock" is sensed, and a weather-associated application may be executed when "knockknockknock-" is sensed.

Meanwhile, in the pattern of "knockknock," "-" which corresponds to a dash of Morse code may refer to an operation of maintaining a contact state between a tap and an object for a predetermined period of time. Or, "-" may refer to a state that a tap is not applied between taps for a predetermined period of time. For example, "knockknock" has a time interval of 1 second or less between taps, and "knock-knock" may have a time interval over 1 second between taps.

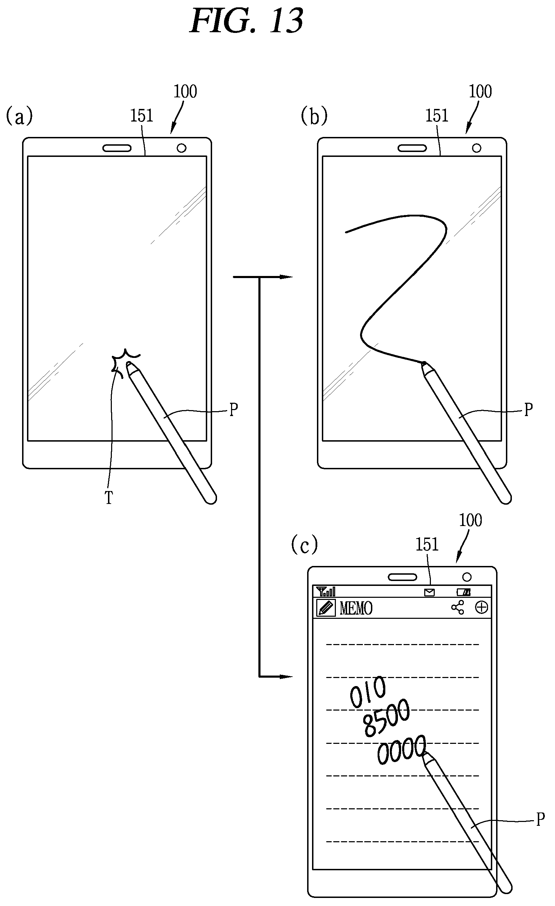

FIGS. 13, 14, 15A, 15B, 15C and 15D are conceptual views illustrating a method of controlling a function according to a touch input which is applied after "knockknock" is applied in a mobile terminal in accordance with one exemplary embodiment disclosed herein.

In the mobile terminal according to one exemplary embodiment disclosed herein, a touch sensor may be deactivated while a sleep mode is activated, but the acceleration sensor may sense "knockknock" in an active state.

However, when a first tap is sensed by the acceleration sensor, the touch sensor may be activated and sense a second tap. When the second tap is sensed by the acceleration sensor and the touch sensor, the controller 180 may execute a function corresponding to a touch input sensed by the touch sensor.

For example, as illustrated in (b) of FIG. 13, when "knockknock" T is sensed, the controller 180 may output a track corresponding to a user's touch operation using a pen P. That is, the controller 180 may execute a memo-associated application in response to "knockknock" T, and execute a memo function of outputting a user's touch track in response to a touch input applied after "knockknock" T. Meanwhile, as illustrated in (c) of FIG. 13, the memo function may also be executed in response to "knockknock" T and the touch input in an inactive state of the display unit 151.

Although not illustrated, when "knockknock" is newly applied with a palm in an activated state of a memo function, a previously-written memo may be stored and a new memo page may be generated. That is, the memo function can be used through relatively simple manipulation, thereby executing a quick memo for fast writing a desired memo.

Meanwhile, a second tap may be changed into a touch input that consecutively moves from a sensed position of the second tap to an arbitrary position. This may be referred to as "knockknock & drag."

For example, the user may apply "knockknock" composed of first and second taps to the touch screen with the user's finger. In this instance, the second tap may consecutively move from the applied position to an arbitrary position without being separated from the touch screen. The second tap may be released on the arbitrary position.

The controller 180 may execute an application which has previously matched a mark (or sign) formed by a touch track. For example, as illustrated in FIGS. 14A and 14B, when the mark formed by "knockknock & drag" is "C," the controller 180 may execute a calendar application previously matched with "C." This may allow the user to immediately execute a desired application by applying "knockknock" to the touch screen and drawing a specific mark along a touch track, without searching for an icon of the desired application.

In addition, the controller 180 may execute a different function according to a direction of a drag input when the second tap according to "knockknock" is the drag input consecutively moving from the sensed position to an arbitrary position.

For example, as illustrated in FIGS. 15A and 15B, while a music reproduction function is executed in a light-off state of the display unit 151, the controller 180 may control the music reproduction function, in response to "knockknock & drag" applied to the display unit 151. For example, the controller 180 may adjust a sound (or volume) of the reproduced music or change the reproduced music to another music in response to "knockknock & drag." Also, the controller 180 may control the music reproduction function in various manners according to a position where the second tap is released after being consecutively moved from the applied position (a dragging direction by the second tap).

For example, as illustrated in FIG. 15A, when "knockknock" T is applied to an arbitrary region of the display unit 151 and a second tap is released after moved from its applied position to a right side, the controller 1890 may immediately reproduce a music which is to be reproduced after a currently-reproduced music. And, as illustrated in FIG. 15B, when the second tap is released after moved from its applied position to a left side, the controller 180 may re-reproduce a music which has been reproduced before the currently-reproduced music.

As illustrated in FIG. 15C, when "knockknock" T is applied to an arbitrary region of the display unit 151 and a second tap is released after consecutively moved from its applied position toward a top of the terminal body, the controller 180 may turn up a volume (or sound). As illustrated in FIG. 15D, when the second tap is released after consecutively moved from the applied position toward a bottom of the terminal body, the controller 180 may turn down the volume.

Although not illustrated, the controller 180 may vary a controlled degree according to a moved distance of a drag input. For example, when "knockknock & drag" for volume adjustment is sensed, the controller 180 may control a volume to be differently adjusted according to a moved distance of the drag input. For a more detailed example, the controller 180 may turn up the volume by '1' step when the drag input is moved up by a distance '1,' and turn up the volume by '3' steps when the drag input is moved by a distance '3' longer than the distance '1.'

As such, the mobile terminal disclosed herein can provide more familiar UX to the user by providing a new interface, so-called "knockknock & drag" as well as "knockknock."

Meanwhile, the controller 180 can control another function according to a state that the mobile terminal is placed. FIG. 16 is a conceptual view illustrating a method of controlling a mobile terminal when the mobile terminal is tapped in a specific situation, in the mobile terminal according to one exemplary embodiment disclosed herein.

For example, as illustrated in FIG. 16, when "knockknock" is applied in a state that the terminal body is placed in a landscape (or horizontal) direction, the controller 180 may activate a camera in response to "knockknock" and execute a camera-associated application. In this instance, the controller 180 may output a camera function screen 801 even though the mobile terminal is in a lock state.

As such, when "knockknock" is applied in the state that the mobile terminal is placed in the landscape direction, the camera-associated application can immediately be executed, which may result in a reduction of user's operations for executing an application, and enhancement of user convenience.

Meanwhile, a plurality of terminals can be activated in response to "knockknock" and perform communications. FIG. 17 is a conceptual view illustrating a method of connecting a plurality of mobile terminals which have sensed the same tap in a mobile terminal in accordance with one exemplary embodiment disclosed herein.

For example, as illustrated in FIG. 17, first and second terminals 100a and 100b may be placed on the same object such as a table. In this instance, when "knockknock" T tapping the table is applied, the first and second terminals 100a and 100b may sense "knockknock" T at a similar time point. That is, since distances from the placed positions of the terminals to a position applied with "knockknock" T are different, the sensing time points of "knockknock" T may not be the same.

Meanwhile, when "knockknock" T generated at a position out of the terminal body is sensed, the mobile terminal may activate a wireless communication unit and search for another mobile terminal which is located adjacent to the mobile terminal and has sensed the same "knockknock" T. When the another mobile terminal which has sensed the same "knockknock" T is searched for, the mobile terminal may connect a channel with the another mobile terminal for sharing data. Therefore, the plurality of terminals can be easily synchronized with each other by applying "knockknock" tapping an object on which the plurality of terminals is placed.

When the channel for sharing data is connected, the controller 180 may output a name of the connected another terminal or a list of transmittable contents on the display unit 151. When at least one content is selected by the user, the controller 180 may transmit the selected content to the connected another terminal.

Meanwhile, in the mobile terminal according to the one exemplary embodiment disclosed herein, the controller 180 may deactivate the display unit 151 in response to "knockknock." Hereinafter, a method of deactivating the display unit will be described in detail with reference to FIG. 18.

FIG. 18 is a conceptual view illustrating an exemplary operation of deactivating a display unit in response to "knockknock" T in a mobile terminal in accordance with one exemplary embodiment disclosed herein. As illustrated in FIG. 18, screen information, such as an execution screen corresponding to at least one function, an idle screen or a lock screen, may be output on the display unit 151.

In the state that the screen information is output on the display unit 151, when "knockknock" is sensed, the controller 180 may deactivate the display unit 151.

In addition, if one or more functions have been executed when "knockknock" is applied, the controller 180 may terminate at least one of the functions. For example, when "knockknock" is applied while audio is output through a speaker, the speaker may be deactivated along with the display unit 151.

That is, a sleep mode in which the terminal is waited with using the least power may be executed in response to "knockknock."

Meanwhile, to prevent a sleep mode from being wrongly activated due to "knockknock," the sleep mode may be activated only when "knockknock" is applied to an empty space in which any object to be executed by a touch is not located among an entire region of the terminal. For example, when "knockknock" is applied to a region on which any icon is not output in a state that a home screen is output on the display unit 151, the sleep mode may be activated. For another example, when "knockknock" is applied to a region which does not belong to the display unit 151, the sleep mode may be activated.

The foregoing description has been given of the embodiments of sensing "knockknock" using the acceleration sensor and the like and controlling a function of the terminal based on a characteristic of "knockknock" and a state of the terminal when "knockknock" is sensed. However, in the embodiments of the present invention, "knockknock" may not be sensed only by the acceleration sensor. The embodiments of the present invention can also extent up to a sensor with which the acceleration sensor can be easily replaced by a skilled person in this art.

For example, in an active state of a touch sensor, the mobile terminal 100 can sense "knockknock" using a touch applied to the touch sensor. That is, when a second touch is applied to a predetermined region within a limited period of time after a first touch is input, it may be determined that "knockknock" has been sensed and thus at least one of functions executable on the terminal can be controlled.

As described above, a mobile terminal according to one exemplary embodiment disclosed herein can control a function thereof in response to "knockknock." Therefore, a user interface which allows a user to simply control the function of the mobile terminal can be provided.

Also, a mobile terminal according to one exemplary embodiment disclosed herein can control a different function or change different setting information according to a characteristic of "knockknock." Therefore, the user can control various functions by applying "knockknock" in various manners.

The aforementioned present disclosure can be implemented as computer-readable codes in a program-recorded medium. The computer-readable medium may include all types of recording devices each storing data readable by a computer system. Examples of such computer-readable media may include ROM, RAM, CD-ROM, magnetic tape, floppy disk, optical data storage element and the like. Also, the computer-readable medium may also be implemented as a format of carrier wave (e.g., transmission via an Internet).

The mobile terminal described herein will not be limited to the configurations and methods of the embodiments disclosed herein, and thus various modifications, variations, and improvements can be made by selectively combining all or part of the embodiments.

### [Industrial Availability]

The embodiments of the present invention propose a method for controlling a function of a mobile terminal in response to an external force, which will be applied to various related industrial fields.

## Claims

1. A mobile terminal, comprising:
a terminal body;
an acceleration sensor capable of sensing taps tapping on an object using a movement of the terminal body, and generating a control signal when a plural number of taps are sensed within a limited period of time; and
a controller capable of controlling at least one of functions executable on the mobile terminal in response to the control signal.

2. The mobile terminal of claim 1, wherein the acceleration sensor generates the control signal when a second tap hitting the object by a second reference number of times is sensed within a limited period of time after a first tap hitting the object by a first reference number of times is sensed.

3. The mobile terminal of claim 2, further comprising a sensing unit activated when the acceleration sensor senses the first tap, and capable of sensing the taps hitting the object,
wherein the controller controls the at least one function in response to the control signal when the acceleration sensor and the sensing unit sense the second tap.

4. The mobile terminal of claim 3, wherein the sensing unit comprises at least one of 1) a touch sensor capable of sensing the second tap using a touch applied to the terminal body, 2) a microphone capable of sensing the second tap using a sound generated around the terminal body, 3) a proximity sensor capable of sensing the second tap using existence or non-existence of an object located adjacent to the terminal body, and 4) a pressure sensor capable of sensing the second tap using pressure applied to the terminal body.

5. The mobile terminal of claim 4, wherein the controller does not control the at least one function even though the control signal is generated when the proximity sensor detects an object located adjacent to a front surface of the terminal body.

6. The mobile terminal of claim 4, wherein the controller discerns a medium of the second tap according to a touch area of the second tap applied to the touch sensor, and executes a different function according to the discerned medium.

7. The mobile terminal of claim 1, further comprising a touch sensor activated in response to the first tap,
wherein the controller executes a function corresponding to a touch input sensed by the touch sensor, in response to the control signal.

8. The mobile terminal of claim 7, wherein the controller executes a different function according to a direction of a drag input when the touch input is the drag input that consecutively moves from a sensed position of the second tap to an arbitrary position.

9. The mobile terminal of claim 8, further comprising a speaker provided in the terminal body and capable of outputting sound information,
wherein the controller activates the speaker in response to the control signal, differently changes a set value associated with the speaker according to the direction of the drag input, and differently controls a changed degree of the set value according to a moved distance of the drag input.

10. The mobile terminal of claim 7, further comprising a display unit capable of outputting a touch track corresponding to the touch input.

11. The mobile terminal of claim 7, wherein the controller executes a different function according to a mark formed by a touch track corresponding to the touch input.

12. The mobile terminal of claim 1, wherein a position to which the tap hitting the object is applied includes a position on the terminal body and a position out of the terminal body.

13. The mobile terminal of claim 12, wherein the controller controls a different function according to a position to which the second tap is applied.

14. The mobile terminal of claim 1, further comprising a display unit disposed on a front surface of the terminal body,
wherein the controller activates the display unit in response to the control signal, and outputs a preset screen on the display unit.

15. The mobile terminal of claim 1, wherein the controller activates a microphone capable of receiving a voice command in response to the control signal, and executes voice recognition with respect to the voice command received through the activated microphone.

16. The mobile terminal of claim 1, wherein the acceleration sensor is in an always-on state while power is supplied to the controller.

17. A mobile terminal comprising:
an acceleration sensor capable of sensing a movement of a terminal body; and
a controller,
wherein the acceleration sensor executes the steps of:
sensing a first tap hitting an object using the movement of the terminal body;
sensing a second tap within a limited period of time after the first tap is sensed; and
generating a control signal in response to the sensed second tap,
wherein the controller controls at least one of functions executable on the mobile terminal, in response to the control signal.

18. The mobile terminal of claim 17, wherein the acceleration sensor further executes the steps of:
restricting an operation with respect to the movement of the terminal body during a period of time set as a no-operation period after the first tap is sensed; and
waiting for sensing the second tap when the movement of the terminal body is maintained within a preset range for a period of time set as a silent period after the lapse of the period of time set as the no-operation period.

19. The mobile terminal of claim 18, wherein the acceleration sensor generates an acceleration signal according to the movement of the terminal body, and senses the first and second taps by comparing an n^{th} generated acceleration signal with an n-1^{st} generated acceleration signal.

20. The mobile terminal of claim 17, further comprising a sensing unit activated when the acceleration sensor senses the first tap, and capable of sensing taps hitting the object,
wherein the controller controls the at least one function in response to the control signal when both of the acceleration sensor and the sensing unit sense the second tap.
